# EUROPÄISCHE PATENTSCHRIFT

(11) **EP 3 978 873 B1**
(45) Veröffentlichungstag und Bekanntmachung des Hinweises auf die Patenterteilung: **10.07.2024**
(21) Anmeldenummer: 21210064.8
(22) Anmeldetag: 31.10.2018
(51) Int. Cl.: G01C 15/00, G01B 11/00, G01B 5/004, G01C 15/06, G01B 3/1084

(54) **VERFAHREN UND STATIONÄRES VERMESSUNGSGERÄT ZUM VERMESSEN UND/ODER OPTISCHEN MARKIEREN VON PUNKTEN**
METHOD AND STATIONARY MEASURING DEVICE FOR MEASURING AND/OR OPTICALLY MARKING POINT
PROCÉDÉ ET DISPOSITIF DE MESURE STATIONNAIRE POUR MESURER ET/OU MARQUER OPTIQUEMENT DES POINTS

(43) Veröffentlichungstag der Anmeldung: 06.04.2022
(62) Teilanmeldung aus: 18796917.5
(73) Patentinhaber: Leica Geosystems AG, 9435 Heerbrugg (CH)
(72) Erfinder: MÜLLER, Josef, 9413 Oberegg (CH); SCHEJA, Jochen, 6845 Hohenems (AT); FAIX, Oliver, 9444 Diepoldsau (CH); BÖSCH, Thomas, 6890 Lustenau (AT); ISELI, Claudio, 9434 Au (CH); MAAR, Hannes, 6850 Dornbirn (AT); LENGWEILER, Patrik, 7304 Maienfeld (CH); GESER, Markus, 9326 Horn (CH)
(74) Vertreter: Kaminski Harmann

(56) Entgegenhaltungen:
- EP-A1- 2 787 322
- EP-A1- 3 333 538
- EP-A1- 3 415 866
- DE-A1- 102008 001 617
- US-A- 5 337 149
- US-A1- 2013 176 305

## Beschreibung

Die Erfindung betrifft ein Messhilfsinstrument, ein Vermessungssystem bzw. Vermessungsgerät und ein Positionsbestimmungs- bzw. Markierverfahren. Vermessungssysteme zum Bestimmen von Positionen im Geodäsiebereich oder Baustellen- bzw. Konstruktionsbereich sind vielfältig bekannt, z.B. aus der US 20130176305 A1, US 5337149 A1, DE 102008001617 A1, EP 3333538 A1, EP 2787322 A1 oder EP 3415866 A1. Beispiel hierfür sind Systeme aus einem stationären Vermessungsgerät mit Richtungs- und Entfernungsmesser wie z.B. eine Totalstation, und einem einen zu vermessenden oder zu kennzeichnenden Punkt markierenden Messhilfsinstrument wie z.B. ein Lotstab. Auch sind Layout-Systeme bekannt aus einem stationären Laseremitter, welches mittels Laserstrahl eine Positionsreferenz erzeugt, welche von einem Laserreceiver am zu markierenden Punkt empfangbar ist. Es erfolgen also durch das Zusammenspiel eines stationären, bekannt verorteten und damit eine Positionsreferenz bietenden Geräts mit einem empfangenden oder markierenden bzw. anzielbaren Messhilfsmittel Vermessungstätigkeiten, wodurch präzise die Position einzelner Geländepunkte wie Landvermessungspunkte oder Punkte an Baustellenobjekten, z.B. im Innen- oder Aussenbereich von Gebäuden oder im Strassenbau, im Hinblick auf Positionsmessung oder Abstecken bestimmt werden kann.

Aufgabe der vorliegenden Erfindung ist die Bereitstellung eines verbesserten Vermessungssystems oder verbesserten Systemgeräts und verbesserten Vermessungsverfahrens.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen sowie der Beschreibung einschliesslich der Figurenbeschreibungen zu entnehmen. Alle dargestellten oder in dieser Schrift anderweitig offenbarten Ausführungsformen der Erfindung sind miteinander kombinierbar, wenn nicht ausdrücklich anders festgestellt.

Ein erster, nicht unter den beanspruchten Gegenstand fallender Aspekt betrifft ein Messhilfsinstrument, insbesondere ein Vermessungs- oder Lotstab, welches ausgebildet ist, zusammen mit einem bodengestützten, insbesondere stationären, Entfernungs- und Richtungsmessfunktionalität aufweisenden Vermessungsgerät, insbesondere einer Totalstation, ein System zum Vermessen und/oder Abstecken von Geländepunkten zu bilden. "Geländepunkt" ist hierbei breit zu verstehen und umfasst z.B. nicht nur Punkte im offenen oder freien Gelände, sondern auch von oder an Gebäuden oder Baustellen, sowohl im Innenbereich als auch Aussenbereich. Das Messhilfsinstrument weist auf einen handhaltbaren Grundkörper mit einer definierten Längsachse, so dass mit dem Messhilfsinstrument händisch ein Geländepunkt anzielbar ist. Das Messhilfsinstrument ist z.B. als Stab ausgebildet, dessen eines Ende auf dem Geländepunkt positionierbar ist. Aus dem Stand der Technik sind auch Lösungen bekannt und hier umfasst, in denen der Punkt nicht physisch, sondern z.B. mit dem Messstrahl eines Distanzmessers angezielt wird. Jedenfalls ist eine Distanz von einem, insbesondere Referenzpunkt des Grundkörpers zum Geländepunkt durch das Messhilfsinstrument selbst festgelegt odergegeben oder bestimmbar.

Weiter weist das Messhilfsinstrument ein Ziel auf, welches am Grundkörper in definierter und bekannter räumlicher Relation zur Längsachse und zum Referenzpunkt angebracht ist und dessen Position vom Vermessungsgerät bestimmbar ist, so dass durch Anzielen des Geländepunkts mit dem Messhilfsinstrument eine mit dem Geländepunkt verknüpfte Zielposition darstellbar ist.

Weiter weist das Messhilfsinstrument am Grundkörper in definierter und bekannter räumlicher Relation zur Längsachse einen aufgesetzten Körper, vorzugsweise einen Kugelaufsatz, auf, insbesondere wobei das Zentrum des Körpers auf der Längsachse angeordnet ist. Der Körper trägt auf seiner Oberfläche einen zweidimensonalen, per Bildverarbeitung eineindeutig auswertbaren Code, so dass eine Orientierung des Aufsatzes und damit (in Kenntnis der definierten und bekannten Relation) die Orientierung (roll, pitch und yaw-Winkel) des Messhilfsinstruments bestimmbar ist.

Optional ist der Code derart ausgebildet und über die Körperoberfläche verteilt, dass anhand eines in einem Kamerabild aufgenommenen Ausschnitts der Körperoberfläche und damit des Codes die Orientierung des Messhilfsinstruments eineindeutig bestimmbar sind.

Als weitere Option weist der Code wenigstens eine erste und zweite Auflösungsstufe auf, wobei die erste Auflösungsstufe ausgebildet ist für Bildaufnahme und Codeauswertung im Nahbereich und die zweite Auflösungsstufe ausgebildet ist für Bildaufnahme und Codeauswertung im Fernbereich und/oder die erste Auflösungsstufe zur groben Neigungs- und Orientierungsbestimmung dient und die zweite Auflösungsstufe zur feinen Neigungs- und Orientierungsbestimmung. Beispielsweise weist der Code genau drei Auflösungsstufen auf.

In einer weiteren Fortbildung ist der Code zweiteilig auf der Kugeloberfläche angeordnet, indem ein erster Teil zur Codierung einer ersten Richtung auf der Kugeloberfläche, insbesondere der Länge bzw. des Längengrads, und ein zweiter Teil zur Codierung einer zweiten Richtung, insbesondere der Breite bzw. des Breitengrads dient, insbesondere wobei der erste und der zweite Teil unterschiedliche Farben aufweisen, z.B. rot und grün. Unter Farbe wird hierbei auch Farben verstanden, die ausserhalb des sichtbaren Bereichs liegen, z.B. im nahen IR-Spektrum oder im UV-Bereich.

Optional ist das Ziel im Kugelaufsatz integriert, z.B. indem die Kugeloberfläche eine Vielzahl von vom Vermessungsgerät anzielbaren Retroreflektoren aufweist. Als weitere Option weist das Messhilfsinstrument eine Lichtquelle auf, mit der die Kugeloberfläche beleuchtbar ist, insbesondere wobei die Lichtquelle im Innern des Kugelaufsatzes angeordnet ist. Als weitere Option ist die Lichtquelle derart ansteuerbar, dass durch Variation der Beleuchtung, z. B. Veränderung der Farbe und/oder Intensität (beispielsweise Blinken), eine Informationsübertragung, z.B. an das Vermessungsgerät ermöglicht ist. So kann z.B. der aktuelle Status des Vermessungsgerät, beispielsweise die Einsatzbereitschaft oder eine ID, mittels Lichtsignal kommuniziert werden oder Anweisungen an einen Benutzer am Vermessungsgerät gegeben werden.

Als Zusatz oder Alternative weist der Kugelaufsatz zumindest eine äussere Schicht aus bruchsicherem, insbesondere elastischem, Material auf und ist derart am Grundkörper angeordnet und ausreichend gross dimensioniert, dass durch den Kugelaufsatz Schäden am Messhilfsinstrument im Falle eines Aufpralls minimiert oder verhindert werden.

Ein weiterer, nicht unter den beanspruchten Gegenstand fallender Aspekt betrifft ausserdem ein bodengestütztes, beispielsweise geodätisches, Vermessungssystem mit einem, insbesondere stationären, Entfernungs- und Richtungsmessfunktionalität aufweisenden Vermessungsgerät, insbesondere einer Totalstation, und einem Messhilfsinstrument wie oben beschrieben, wobei das Vermessungsgerät eine Kamera aufweist, mittels derer ein zweidimensionales Bild zumindest eines Ausschnitts der Oberfläche des Kugelaufsatzes aufnehmbar ist und das System eine in einem Speicher hinterlegte Decodieranweisung (einen Decodieralgorithmus oder eine Decodierinformation) zur Decodierung des Codes aufweist sowie eine Steuerung mit Decodierfunktonalität, welche ausgebildet ist, anhand der Decodierinformation das Kamerabild dergestalt auszuwerten, dass eine Orientierung des Messhilfsinstruments eineindeutig bestimmbar ist.

In einer Fortbildung des Vermessungssystems ist die Steuerung derart ausgebildet ist, dass im Rahmen der Decodierfunktonalität der Abbildung der Kugel im Kamerabild ein Kreis angefittet wird, mittels des angefitteten Kreises das Zentrum der Kugelabbildung ermittelt wir und derjenige Code decodiert wird, der in einem um das Zentrum gelegenen Oberflächenausschnitt vorhanden ist. Optional weist das Vermessungsgerät des Vermessungssystems auf eine Basis, eine eine Zielrichtung definierende und gegenüber der Basis um wenigstens eine Achse, insbesondere zwei zueinander orthogonale Achsen, schwenkbare Anzieleinheit, insbesondere ein Zielfernrohr, zum Anzielen des Ziels, wenigstens einen Winkelmesser sowie eine Winkelmessfunktionalität zur Messung der Zielrichtung, einen Entfernungsmesser zur Messung einer Entfernung zum Ziel in Zielrichtung, und eine Steuerung mit Einzelpunktbestimmungsfunktionalität, bei deren Ausführung gesteuert durch die Steuerung basierend auf der gemessenen Zielrichtung, der Entfernung zwischen Ziel und Vermessungsgerät und der anhand des Kugelaufsatzes bestimmten Neigung und Orientierung des Messhilfsinstruments eine Position eines mit Hilfe des Messhilfsinstruments bezeichneten Geländepunkts innerhalb eines Geländebereichs bestimmt wird. Optional weist die Anzieleinheit ein solches Vermessungsgerät auf eine Strahlquelle zur Erzeugung einer Messstrahlung, vorzugsweise Laserstrahlung, sowie eine Optik zur Emission der Messstrahlung als Freistrahl in Zielrichtung aufweist und einen elektro-optischen Detektor zum Detektieren von vom Ziel reflektierter Messstrahlung, woraus die Entfernung zum Ziel bestimmbar ist, wobei bei Ausführung der Einzelpunktbestimmungsfunktionalität das Ziel des Messhilfsinstruments mittels Einstellen der Zielrichtung angezielt wird, so dass Messstrahlung auf das Ziel trifft, und vermittels der Messstrahlung die Entfernung zwischen Ziel und Vermessungsgerät bestimmt wird.

Als weitere Option weist das Vermessungssystem einen Antrieb zur automatisierten Änderung der Zielrichtung und eine Zielverfolgungsfunktionalität auf, so dass bei Aktivierung der Zielverfolgungsfunktionalität die Zielrichtung einem sich bewegenden Messhilfsinstrument automatisch folgt, wobei die Zielverfolgungsfunktionalität auf einer Auswertung des Kamerabilds des Kugelaufsatzes basiert, insbesondere wobei im Rahmen der Zielverfolgungsfunktionalität fortlaufend Bilder des Kugelaufsatzes aufgenommen werden und die Zielrichtung fortlaufend derart geändert wird, dass das Abbild der Kugel im Zentrum der Bilder gehalten wird.

Optional ist der Code dergestalt ausgebildet ist, dass der Code unabhängig von der Entfernung von Vermessungsgerät zu Messhilfsinstrument (natürlich innerhalb gewisser Grenzen bzw. bis zu einer Maximalentfernung) eineindeutig auswertbar ist. Beispielsweise ist dann die Kamera des Vermessungsgeräts mit einem Autofocus ausgestattet, um den Code entfernungsunabhängig automatisch scharf abzubilden.

Ein weiterer, nicht unter den beanspruchten Gegenstand fallender Aspekt betrifft zudem ein Verfahren zum Bestimmen der Position eines Geländepunkts mit den Schritten Anzielen des Geländepunkts mit einem Messhilfsinstrument wie oben beschrieben, Messen der Entfernung und Richtung zum durch das Messhilfsinstrument bereitgestellte Ziel während des Anzielens des Geländepunkts von einem bodengestützten Vermessungsgerät, insbesondere einer Totalstation, aus, Bereitstellen der Distanz zwischen Ziel und Geländepunkt (also Wissen um die zuvor fixierte Distanz und/oder Messen einer variablen Distanz z.B. mittels eines Laserdistanzmessers des Messhilfsinstruments), Bestimmen der Neigung und Orientierung des Messhilfsinstruments mittels Bildauswertung eines Kamerabilds, in welchem zumindest ein Teil des mit 2D-Code versehenen Körpers abgebildet ist, und Bestimmen der Position des Geländepunkts, ausgehend von einer bekannten Position des Vermessungsgeräts, anhand der Entfernung und Richtung, der Distanz und der Orientierung.

Optional beinhaltet das Verfahren eine Zielverfolgung (Tracking) des Messhilfsinstruments anhand einer Folge von vom Vermessungsgerät aufgenommenen Bildern des aufgesetzten Körpers, z.B. indem jeweils eine Abweichung der Position im Kamerabild der Kugel von einer Idealposition (z.B. Mitte des Bilds) bestimmt wird und anhand der Abweichungen die Ausrichtung des Vermessungsgeräts fortwährend geändert wird, also die Zielrichtung der Bewegung des Messhilfsinstruments nachgeführt wird.

Ein weiterer, nicht unter den beanspruchten Gegenstand fallender Aspekt betrifft ein bodengestütztes, insbesondere geodätisches, Vermessungssystem zum Vermessen und/oder Abstecken von Geländepunkten mit einem, insbesondere stationären, Entfernungs- und Richtungsmessfunktionalität aufweisenden Vermessungsgerät, insbesondere einer Totalstation, und einem Messhilfsinstrument, wobei das Vermessungsgerät aufweist eine Basis, eine eine Zielrichtung definierende und gegenüber der Basis um wenigstens eine Achse, insbesondere zwei zueinander orthogonale Achsen, schwenkbare Anzieleinheit, insbesondere ein Zielfernrohr, einen Entfernungsmesser sowie einer Entfernungsmessfunktionalität zur Messung einer Entfernung zum Ziel in Zielrichtung und wenigstens einen Winkelmesser sowie eine Winkelmessfunktionalität zur Messung der Zielrichtung. Das Messhilfsinstrument weist auf eine handhaltbare Stange, deren eines Ende zum physischen Kontaktieren eines Geländepunkts vorgesehen ist und ein an, insbesondere am anderen Ende, der Stange angebrachtes, vom Vermessungsgerät anzielbares Ziel, wobei das Ziel in definiertem und einem Speicher des Vermessungssystems hinterlegtem Abstand zum Kontaktende an der Stange angebracht ist, so dass durch Kontaktieren des Geländepunkts mit dem Kontaktende eine mit dem Geländepunkt verknüpfte Zielposition bereitstellbar ist.

Weiter weist das Vermessungssystem eine Steuerung mit Auswertefunktionalität auf, wobei im Rahmen der Auswertefunktionalität basierend auf der Zielrichtung und Entfernung zwischen Ziel und Vermessungsgerät die Zielposition bestimmbar ist, und die Steuerung eine Kalottenmessfunktionalität zur Bestimmung der Position eines Geländepunkts aufweist, wobei bei Ausführung der Kalottenmessfunktionalität basierend jeweils auf der Zielrichtung und Entfernung wenigstens drei mit dem Geländepunkt verknüpfte, nicht-komplanare Zielpositionen bestimmt werden, wobei die nicht-komplanaren Zielpositionen z.B. durch wenigstens drei unterschiedliche Ausrichtungen oder Neigungen der den Geländepunkt kontaktierenden Stange des Messhilfsinstruments bereitgestellt werden. Weiter wird im Rahmen der Kalottenmessfunktionalität anhand der drei Zielpositionen und dem hinterlegten Abstand zwischen Ziel und Kontaktende eine Kalotte samt zugehörigem Kugelmittelpunkt berechnet wird, und der Kugelmittelpunkt als Position des Geländepunkts übernommen wird.

Alternativ braucht das Ziel nicht in einem definierten, bekannten Abstand zum Kontaktende angebracht sein, indem die Kalottenberechnung nicht auf drei, sondern mindestens vier nicht-komplanare Zielpositionen gestützt ist. Ein etwaig bekannter Abstand Ziel-Geländepunkt kann dann optional zur Steigerung der Robustheit der Kalottenberechnung bzw. Punktbestimmung genutzt werden bzw. zur Verifizierung des Berechnungsergebnisses.

Optional ist das Ziel des Messhilfsinstruments retroreflektierend und die Anzieleinheit weist eine Strahlquelle zur Erzeugung einer Messstrahlung und eine Optik zur gerichteten Emission der Messstrahlung als Freistrahl in Zielrichtung sowie einen elektro-optischen Detektor zum Detektieren von vom Ziel reflektierter Messstrahlung auf, so dass die zur Zielpositionsbestimmung herangezogene Entfernung zum Ziel anhand detektierter Messstrahlung bestimmbar ist.

Als weitere Option weist das Messhilfsinstrument ein Benutzerdisplay auf und die Steuerung ist derart ausgebildet, dass im Rahmen der Kalottenmessfunktionalität einem Benutzer auf dem Benutzerdisplay eine Anleitung hinsichtlich Verschwenkens des Messhilfsinstruments zur Erzeugung der nicht-komplanaren Zielpositionen angezeigt wird, insbesondere im Hinblick auf eine optimale, insbesondere homogene und/oder grossflächige Anordnung der Zielpositionen.

In einer Fortbildung wird die Anleitung bereitgestellt basierend auf einem Kamerabild des Messhilfsinstruments und seiner Umgebung beim Kontaktieren des Geländepunkts, wobei das Kamerabild mittels einer Kamera des Vermessungsgeräts aufgenommen ist. Optional erfolgt anhand des Kamerabilds eine Ermittlung eines auszuschliessenden Verschwenkbereichs, der für ein Anzielen des kontaktierenden Messhilfsinstruments mittels des Vermessungsgeräts ungeeignet, insbesondere unmöglich, ist, und/oder eine Ermittlung eines optimalen Verschwenkbereichs erfolgt, der für ein Anzielen des kontaktierenden Messhilfsinstruments mittels des Vermessungsgeräts besonders gut geeignet ist. Alternativ oder zusätzlich basiert die Anleitung oder Benutzerführung auf wenigstens der ersten bestimmten Zielposition.

Als weitere Option erfolgt die Anleitung grafisch, indem auf dem Benutzerdisplay eine grafische Anzeige eines Verschwenkbereichs und/oder einzelner Verschwenkstellungen hinsichtlich einer auszuführenden Verschwenkbewegung des kontaktierenden Messhilfsinstruments erfolgt (z.B. empfohlene und/oder ungünstige Bereiche oder Stellungen). Beispielsweise ist die grafische Anzeige eingebettet in ein kamerabildbasiertes Abbild (also Kamerabild oder auch daraus errechnetes virtuelles Abbild) der Umgebung des kontaktierenden Messhilfsinstruments, wobei das Kamerabild mittels einer Kamera des Vermessungsgeräts aufgenommen ist und/oder eine Perspektive des Benutzers auf das Messhilfsinstrument und/oder seinen Standort zeigt.

Optional werden die Zielpositionen in einem temporären Speicher des Vermessungssystems vorgehalten und nach Abschluss der Bestimmung des Geländepunkts aufgegeben bzw. gelöscht.

Ein weiterer, nicht unter den beanspruchten Gegenstand fallender Aspekt betrifft zudem ein Verfahren zum Bestimmen der Position eines Geländepunkts mittels eines oben beschriebenen Vermessungssystems mit Kalottenmessfunktonalität, wobei das Verfahren die folgenden Schritte beinhaltet: Kontaktieren des Geländepunkts mit dem Kontaktende des Messhilfsinstruments, Verschwenken des kontaktierenden Messhilfsinstruments, so dass wenigstens drei unterschiedliche, mit dem Geländepunkt verknüpfte Zielpositionen bereitgestellt werden, Bestimmen der wenigstens drei Zielpositionen mittels des Vermessungsgeräts, Berechnen einer Kalotte anhand der wenigstens drei Zielpositionen und des bekannten Abstands zwischen Ziel und Kontaktende des Messhilfsinstruments mit Berechnen des zur Kalotte gehörigen Kugelmittelpunkts, wodurch durch den Kugelmittelpunkt die Position des Geländepunkts bestimmt ist, bzw. die Schritte: Kontaktieren des Geländepunkts mit dem Kontaktende des Messhilfsinstruments, Verschwenken des kontaktierenden Messhilfsinstruments, so dass wenigstens vier unterschiedliche, mit dem Geländepunkt verknüpfte Zielpositionen bereitgestellt werden, Bestimmen der wenigstens vier Zielpositionen mittels des Vermessungsgeräts, Berechnen einer Kalotte anhand der wenigstens vier Zielpositionen mit Berechnen des zur Kalotte gehörigen Kugelmittelpunkts, wodurch durch den Kugelmittelpunkt die Position des Geländepunkts bestimmt ist.

Optional erfolgt während des Verschwenkens ein automatisches Zielverfolgen und automatisches Zielpositionsbestimmen durch das Vermessungsgerät.

Als weitere Option erfolgt eine Ausgabe einer Warnung an einen Benutzer, falls das Bestimmen der Zielpositionen aufgrund fehlender oder mangelhafter Anzielbarkeit des Ziels durch das Vermessungsgerät mangelhaft oder unmöglich ist.

In einer Fortbildung des Verfahrens erfolgt ein automatisches oder benutzerseitiges Beurteilen der Qualität der Position des Geländepunkts erfolgt, wobei bei als ungenügend beurteilter Qualität ein erneutes oder zusätzliches Bestimmen von Zielpositionen erfolgt. Dabei erfolgt optional für das Beurteilen ein automatisches Erzeugen eines Qualitätsmasses erfolgt, welches auf einer Überbestimmtheit der errechneten Kalotte basiert (z.B. Überbestimmtheit durch Vorhandensein von mehr als der drei bzw. vier notwendigen Positionspunkte oder durch Kenntnis des realen Abstands Ziel-Kontaktpunkt). Als weitere Option wird für ein benutzerseitiges Beurteilen eine geländepunktpositionsbezogene grafische Darstellung erzeugt.

Als weitere Option erfolgt ein automatisches Beenden des Bestimmens von Zielpositionen erfolgt, sobald ein vorgegebenes Abbruchkriterium erfüllt ist, insbesondere eine maximale Zeitdauer abgelaufen ist, eine erforderliche Genauigkeit erreicht und/oder eine minimale Anzahl an Zielpositionen bestimmt ist.

Optional laufen das Bestimmen von Zielpositionen und Berechnen der Kalotte dergestalt simultan ab, so dass das Errechnen erfolgt, sobald eine Mindestanzahl von Zielpositionen vorliegt und weitere Zielpositionen zum fortlaufenden Aktualisieren und/oder Verfeinern der errechneten Kalotte dienen.

Ein weiterer, nicht unter den beanspruchten Gegenstand fallender Aspekt betrifft ein Messhilfsinstrument welches ausgebildet ist, zusammen mit einem bodengestützten, insbesondere stationären, Entfernungs- und Richtungsmessfunktionalität aufweisenden Vermessungsgerät, insbesondere einer Totalstation, ein System zum, insbesondere geodätischen, Vermessen und/oder Abstecken von Objektpunkten zu bilden. Das Messhilfsinstrument weist auf einen handhaltbaren Grundkörper mit einer definierten Länge, und wenigstens ein am Grundkörper definiert angeordnetes Element, welches ausgebildet ist, in Zusammenwirkung mit dem Vermessungsgerät Position und Orientierung des Messhilfsinstruments zu messen. Es ist dafür an einem zweiten Ende des Messhilfsinstruments ein Körper, insbesondere eine Kugel, aufgesetzt. Der Körper ist dabei vorgesehen zur optisch-bildbasierten Bestimmung der Position des Messhilfsinstruments durch das Vermessungsgerät.

Vorzugsweise ist der Körper Träger eines 2D-Codes auf seiner Oberfläche und dabei derart ausgebildet, dass per Bildauswertung eines Kamerabilds des 2D-Codes und anhand, z.B. in einem Speicher des Vermessungsgeräts, hinterlegter Decodierinformation eine Orientierung und Entfernung des kugelförmigen Aufsatzes und damit des Messhilfsinstruments (vom Vermessungsgerät) bestimmbar ist. Die Entfernung ergibt zusammen mit einer gemessenen Richtung zum Messhilfsinstrument die Position des Messhilfsinstruments im Raum bzw. relativ zum Vermessungsgerät, so dass insgesamt die Lage (Orientierung und Position, 6-DoF) des Messhilfsinstruments anhand des Körpers bestimmbar ist.

Zudem weist das Messhilfsinstrument ein Mensch-Maschinen-Interface auf.

Zudem ist das Messhilfsinstrument in Form und Grösse stiftartig ausgebildet, wobei mit einem ersten Ende des Messhilfsinstruments einhändisch ein zu vermessender oder abzusteckender Objektpunkt anzielbar ist.

Vorzugsweise ist das Messhilfsinstrument ergonomisch mit einer Hand halt- und führbar, insbesondere wozu der Grundkörper an die menschliche Hand angepasste Ausbuchtungen und/oder Wölbungen aufweist, insbesondere einen Greifbereich für zumindest Daumen und Zeigefinger, sowie insbesondere auch Mittelfinger, eines Benutzers, und/oder die Massenverteilung des Messhilfsinstruments derart abgestimmt ist, dass sein Schwerpunkt ergonomischen Gesichtspunkten genügt.

Optional weist das Messhilfsinstrument eine inertiale Messeinheit (IMU) auf, so dass durch eine Kombination von Messdaten der inertialen Messeinheit und von anhand des Körpers bestimmten Positionsdaten die Lage des Messhilfsinstruments vollständig bestimmbar ist.

Als weitere Option ist das erste Ende als Tastkugel ausgebildet mit elektronischer und/oder mechanischer Korrektur des Messversatzes aufgrund der Grösse der Tastkugel. Dabei erfolgt die Korrektur vorzugsweise derart, dass die Tastkugel derart angebracht ist, dass zum Vermessen eines Objektpunkts die Tastkugel genau um den Radius der Tastkugel ausgelenkt wird.

Optional ist das erste Ende als selbstauslösende Sensorspitze ausgebildet, welche bei Berührung selbsttätig eine Messung auslöst. Optional ist das Ende austauschbar, indem der Grundkörper eine Halterung (Verbindungsstück) aufweist, welche vorgesehen ist zur Aufnahme unterschiedlicher Werkzeug- und/oder Sensorspitzen, insbesondere wobei die Halterung eine Sensorik aufweist, welche zur automatischen Identifizierung der jeweiligen Spitze dient. Optional erfolgt im Zuge der Identifizierung ein Identifizieren der Länge der Spitze, d.h. der Mess- oder Markierpunkt der Spitze wird automatisch dem Messsystem mitgeteilt.

Als weitere Option ist die Werkzeug- und/oder Sensorspitze ausgebildet als Markierstift, insbesondere Filzstift, Bleistift oder Kreidestift, und/oder aktive Werkzeugspitze, insbesondere Drucker und/oder Sprüher und/oder Markierlaser, insbesondere Linienlaser, und/oder ausgebildet als Sensorspitze, insbesondere (Berührungs-)Ttaster und/oder Metalldetektor, Leitungssucher (z.B. mit Funktion zur aktiver Aufmodulation eines Signals auf die Leitung) und/oder Laserdistanzmesser.

Optional weist das Mensch-Maschinen-Interface auf ein berührungssensitives Display und/oder ein Scrollwheel und/oder ein Mikrophon (zur Sprachsteuerung) und/oder ein Leuchtmittel zur visuellen Benutzerinformation und/oder einen Taster. Ein solcher Taster ist optional ausgebildet als gesondert geformter und/oder gesondert am Grundkörper angeordneter Auslöseknopf, wobei der Auslöseknopf vorgesehen ist zum Auslösen der Positions- und Orientierungsmessung des Messhilfsinstruments und/oder das Messhilfsinstrument weist eine aktive Werkzeugspitze und/oder Sensorspitze auf und der Auslöseknopf vorgesehen ist zum Auslösen einer Aktion der Werkzeugspitze (z.B. Markieren) und/oder einer Messung mit der Sensorspitze.

Als weitere Option weist das Messhilfsinstrument ein, insbesondere abnehmbares, Massband variabler Länge auf, insbesondere mit Arretierfunktion, wobei das Massband für Kreiskonstruktionen vorgesehen ist, insbesondere so dass der Kreismittelpunkt auf der Längsachse liegt.

In einer Fortbildung ist das wenigstens eine zur Position- und Orientierungsmessung vorgesehene Element ausgebildet als Kugelaufsatz, welcher auf seiner Oberfläche einen zweidimensionalen, per Bildverarbeitung eines mit einer Kamera des Vermessungsgeräts aufgenommenen Bilds eineindeutig auswertbaren Code trägt.

Optional ist die Länge des Messhilfsinstruments definiert variabel, insbesondere indem der Grundkörper an seinem einen durch die Längsachse definierten Ende eine Halterung zur Aufnahme von stabförmigen Verlängerungsstücken aufweist, insbesondere wobei die Halterung eine Sensorik aufweist, welche zur automatischen Identifizierung des jeweiligen Verlängerungsstücks dient, und/oder der Grundkörper teleskopartig ausgebildet ist, so dass seine Länge, insbesondere stufenlos, variierbar ist, wobei mittels eines Positionsencoders des Messhilfsinstruments oder einem integrierten elektronischen Distanzmesser, der z.B. in einem inneren Hohlraum angeordnet ist, die jeweils vorliegende Länge messbar ist.

Als weitere Option weist das Messhilfsinstrument eine Kommunikationsschnittstelle, insbesondere IRDA- oder BLT- Schnittstelle, auf, um darüber mit dem Vermessungsgerät zur kommunizieren.

Ein weiterer, nicht unter den beanspruchten Gegenstand fallender Aspekt betrifft ein bodengestütztes Vermessungssystem mit einem, insbesondere stationären, Entfernungs- und Richtungsmessfunktionalität aufweisenden Vermessungsgerät, insbesondere einer Totalstation, und einem stiftartigen Messhilfsinstrument wie oben beschrieben.

Optional weist das Vermessungsgerät des Systems auf eine Basis, eine eine Zielrichtung definierende und gegenüber der Basis um wenigstens eine Achse, insbesondere zwei zueinander orthogonale Achsen, schwenkbare Anzieleinheit, insbesondere ein Zielfernrohr, insbesondere wobei die Anzieleinheit eine Strahlquelle zur Erzeugung einer Messstrahlung sowie eine Optik zur gerichteten Emission der Messstrahlung als Freistrahl aufweist, wenigstens einen Winkelmesser sowie eine Winkelmessfunktionalität zur Messung der Zielrichtung, und eine Steuerung mit Einzelpunktbestimmungsfunktionalität, bei deren Ausführung gesteuert durch die Steuerung eine Position eines mit Hilfe des Messhilfsinstruments bezeichneten Objektpunkts innerhalb eines Geländebereichs bestimmt wird.

Ein weiterer, nicht unter den beanspruchten Gegenstand fallender Aspekt betrifft zudem ein Verfahren zum Bestimmen der Position und/oder Markieren eines Geländepunkts mit den Schritten Anzielen des Objektpunkts mit einem stiftartigen Messhilfsinstrument wie oben beschrieben,

Bestimmen der Position und Orientierung des Messhilfsinstruments während des Anzielens des Objektpunkts mittels eines bodengestützten Vermessungsgeräts, insbesondere einer Totalstation, Bestimmen der Position und/oder Markieren des Objektpunkts (Markieren und/oder Vermessen), ausgehend von einer bekannten Position des Vermessungsgeräts, anhand der bestimmten Position und Orientierung des Messhilfsinstruments.

Optional erfolgt im Rahmen des Verfahrens ein fortlaufendes Bestimmen der Position und Orientierung des Messhilfsinstruments (Tracken) und bei Erreichen einer vorgegebenen Position und Orientierung wird automatisch das Markieren des Objektpunkts ausgelöst, also bei Überstreichen des zu erzielenden Objektpunkts automatisch der Punkt markiert.

Ein weiterer, nicht unter den beanspruchten Gegenstand fallender Aspekt betrifft einen Laserreceiver zum Erfassen eines eine Positionsreferenz darstellenden Laserstrahls bzw. Laserlichts zu Bautätigkeitszwecken bzw. im Baustellenbereich mit einem Gehäuse mit einer Frontfläche und einer Rückfläche, wobei die Frontfläche einen zeilen- oder flächenartigen Laserdetektor zur Detektion des Laserlichts aufweist und die Rückfläche derart ausgebildet ist, dass der Laserreceiver entlang einer grossflächigen Objektfläche und dem Verlauf der Objektfläche folgend verschiebbar ist. Bei der Objektfläche handelt es sich vorzugsweise um eine Gebäudefläche, oder ähnliche zumindest abschnittsweise ebene Flächen, die vorbekannt sind, z.B. vorbekannt anhand eines Gebäudeplans oder sonstigen Bau-/Konstruktionsplanes oder Modells.

Der Laserreceiver weist weiter einen Markierer auf, insbesondere einen Drucker, wobei der Markierer derart ausgebildet und angeordnet ist, dass im auf der Objektfläche angelegten Zustand in einer Markierzone auf die Objektfläche eine physische Markierung anbringbar ist. Weiter weist der Laserreceiver eine Steuerung auf, welche derart ausgebildet ist, dass automatisch mittels des Markierers basierend auf der durch das erfasste Laserlicht gegebenen Positionsreferenz eine Markierung positionsgenau an einer in einem elektronischen Speicher hinterlegten geplanten bzw. vorgesehenen Position auf die Objektfläche anbringbar ist, sobald die geplante Position in die Markierzone gelangt, z.B. indem der Laserreceiver die geplante Stelle zumindest angenähert erreicht oder überstreicht.

Optional weist der Markierer einen linienartigen oder flächenhaften Markierbereich auf und/oder ist ausgebildet als Tintenstrahldrucker und/oder zum Drucken von Texten und/oder Grafiken auf die Objektfläche. Derartige Grafiken sind z.B. 2D- 3D-Barcodes oder QR-Codes, welche beispielsweise zur eindeutigen Identifikation von Messpunkten dienen. Als weitere Option ist der Markierer geeignet zum Drucken auf Decken (Druckrichtung nach "oben", entgegen der Schwerkraft) und/oder zusätzlich ausgebildet zum Aufbringen einer Versiegelung der Markierung, z.B. mittels Klarlack oder einer Schutzfolie.

Als weitere Option ist die geplante Position als Teil eines Bauplans, wie z.B. eines Gebäudeplans, hinterlegt.

Als weitere Option ist der Laserreceiver zum manuellen Verschieben ausgebildet, insbesondere indem er eine handhaltbare Formung des Gehäuses und/oder einen handhaltbaren, am Gehäuse angebrachten Fortsatz aufweist.

In einer Fortbildung weist der Laserreceiver wenigstens einen Positionsgeber zur kontinuierlichen Bestimmung der Position und/oder Orientierung des Laserreceivers auf, insbesondere wobei die Steuerung dergestalt ausgebildet ist, dass mittels Positionsdaten des Positionsgebers Bereiche, in denen keine Positionsreferenzierung mittels des Laserlichts möglich ist, überbrückbar sind und/oder der Positionsgeber ausgebildet ist als von einem Vermessungsgerät anmessbares Ziel, insbesondere Retroreflektor, und/oder wenigstens drei definiert am Gehäuse angeordnete Leuchtmittel, welche von einer Kamera in einem Bild erfassbar sind, und/oder inertiale Messeinheit, z.B. mit Beschleunigungssensoren und Drehratensensoren, und/oder optischer oder mechanischer Lineargeber.

Optional weist die Rückfläche Räder und/oder Raupen zum Verschieben des Laserreceivers auf. Als weitere Option weist der Laserreceiver eine Reinigungsvorrichtung zur Reinigung der Objektfläche auf, insbesondere eine Vorrichtung zum Versprühen von Druckluft und/oder Lösungsmittel und/oder einen Antrieb zum selbstständigen Verschieben aufweist.

Ein weiterer, nicht unter den beanspruchten Gegenstand fallender Aspekt betrifft zudem einen mobilen Baustellendrucker zum automatischen Drucken von Baustellenmarkierungen auf ebene Flächen, insbesondere Gebäudeflächen, im Rahmen von Bauarbeiten oder ähnlichen grossflächigen Konstruktionsarbeiten, z.B. beim Auf- oder Umbau von Gebäuden oder Gebäudeteilen, beispielsweise auch Auf- und Abbauarbeiten in Messehallen, oder an anderen grossflächigen Objekten wie Schiffe oder Flugzeuge. Der Drucker weist eine Druckzone auf, der Drucker dergestalt ausgebildet ist, dass er von einem Benutzer entlang der Objektfläche und dem Verlauf der Objektfläche folgend händisch bewegbar ist, wobei durch die Bewegung entlang der Objektfläche die Translation hinsichtlich einer Richtung und die Rotation hinsichtlich zweier Achsen festgelegt sind. Der Drucker weist wenigstens einen Positionsgeber auf, z.B. einen Gierwinkelsensor in Kombination mit einem Neigungssensor, womit die Position hinsichtlich der zwei restlichen translatorischen Freiheitsgrade und des einen restlichen rotatorischen Freiheitsgrads des Druckers kontinuierlich bestimmbar ist. Weiter weist der Drucker eine Steuerung auf, welche derart ausgebildet ist, dass fortwährend die (kontinuierlich bestimmte) Position des Druckers mit einer in einem elektronischen Speicher hinterlegten geplanten Position auf der Objektfläche abgleichbar ist, so dass unterbrechungslos während der Bewegung automatisch eine Baustellenmarkierung an der hinterlegten geplanten Position auf die Objektfläche positionsgenau druckbar ist, sobald die geplante Position in die Druckzone gelangt, also z.B. der Drucker die geplante Position im Rahmen der Bewegung zumindest angenähert überstreicht.

Ein weiterer, nicht unter den beanspruchten Gegenstand fallender Aspekt betrifft zudem einen mobilen Baustellendrucker zum automatischen Drucken von Baustellenmarkierungen auf Objektflächen im Rahmen von Bauarbeiten, wobei der Drucker eine Druckzone aufweist, der Drucker mobil entlang einer Objektfläche bewegbar ist, der Drucker wenigstens einen Positionsgeber aufweist, so dass Lage und Ausrichtung des Druckers relativ zur Objektfläche vollständig bestimmbar sind, und der Drucker eine Steuerung aufweist, welche derart ausgebildet ist, dass fortwährend die Lage und Ausrichtung des Druckers im Hinblick auf eine in einem elektronischen Speicher hinterlegten geplanten Position auf der Objektfläche abgleichbar ist, so dass unterbrechungslos während der Bewegung automatisch eine Baustellenmarkierung an der hinterlegten geplanten Position auf die Objektfläche positionsgenau druckbar ist, sobald die geplante Position in die Druckzone gelangt.

Die oben beschriebenen Fortbildungen des erfindungsgemässen Laserreceivers sind entsprechend auch auf einen jeweiligen erfindungsgemässen mobilen Baustellendrucker anwendbar.

Ein weiterer, nicht unter den beanspruchten Gegenstand fallender Aspekt betrifft zudem ein Verfahren zum physischen Markieren einer geplanten, in einem elektronischen Speicher, insbesondere als Teil eines Gebäudeplans, hinterlegten Position auf einer Objektfläche zu Bautätigkeitszwecken mit den Schritten Bereitstellen einer Positionsreferenz mittels Freistrahl-Laserlicht, Verschieben eines einen Markierer, insbesondere einen Drucker, aufweisenden Laserreceivers auf der Objektfläche, Erfassen des eine Positionsreferenz darstellenden Laserlichts mittels des Laserreceivers, elektronisch gesteuertes automatisches positionsgenaues physisches Markieren der aus dem Speicher abgerufenen geplanten Position auf der Objektfläche während des Verschiebens basierend auf der durch das erfasste Laserlicht gegebenen Positionsreferenz sobald der Laserreceiver zumindest angenähert über die geplante Position geführt wird.

Ein weiterer, nicht unter den beanspruchten Gegenstand fallender Aspekt betrifft ausserdem ein Verfahren zum Markieren einer geplanten, in einem elektronischen Speicher, insbesondere als Teil eines Gebäudeplans, hinterlegten Position auf einer Objektfläche zu Bautätigkeitszwecken mit den Schritten Bewegen eines mobilen Baustellendruckers entlang der Objektfläche, wobei die Position, und optional auch die Orientierung oder Ausrichtung des Druckers kontinuierlich bestimmt wird, automatisches kontinuierliches Abgleichen der jeweiligen Position mit der im elektronischen Speicher hinterlegten geplanten Position auf der Objektfläche, automatisches positionsgenaues Drucken einer Markierung an geplanten Position auf der Objektfläche während des Bewegens sobald der Laserreceiver zumindest angenähert die geplante Position überstreicht, insbesondere wobei eine Unterbrechung der Bewegung zum Drucken nicht erforderlich ist.

Optional werden im Rahmen dieser Verfahren zusätzlich zur Positionsmarkierung in einem elektronischen Speicher hinterlegte Metadaten abgerufen und mittels des Markierers bzw. Druckers eine die Metadaten wiedergebende Darstellung, insbesondere ein Text und/oder eine Grafik, auf die Objektfläche bei der Positionsmarkierung aufgebracht.

Optional erfolgt vor dem Markieren eine Reinigung der Objektfläche an der geplanten Position mittels des Laserreceivers oder des mobilen Druckers. Als weitere Option erfolgt nach dem Markieren das Aufbringen einer Schutzschicht auf die Markierung, z.B. Aufbringen eines Schutzlacks oder-folie.

Die Erfindung betrifft ein Verfahren zum Vermessen und/oder Markieren von Punkten auf einem Objekt anhand geplanter Positionen zu Bautätigkeitszwecken mit den Schritten Aufstellen eines stationären Vermessungsgeräts an einer ersten bekannten Positionierung in einer Umgebung des Objekts, wobei das Vermessungsgerät aufweist eine Basis, eine eine Zielrichtung definierende und gegenüber der Basis um wenigstens eine Achse, insbesondere zwei zueinander orthogonale Achsen, schwenkbare Anzieleinheit, insbesondere ein Zielfernrohr, eine Strahlquelle, insbesondere Laserquelle, zur Strahlungserzeugung sowie eine Optik zur Emission der Strahlung als Freistrahl in Zielrichtung, wobei der Freistrahl zum Vermessen und/oder Markieren von Objektpunkten dient, und insbesondere einen Entfernungsmesser sowie einer Entfernungsmessfunktionalität zur Messung einer Zielentfernung in Zielrichtung, Wenigstens einen Winkelmesser sowie eine Winkelmessfunktionalität zur Messung der Zielrichtung, und eine Steuerung mit Einzelpunktbestimmungsfunktionalität, sowie einen Speicher, in dem eingegebene oder vermessene Positionen hinterlegbar sind, insbesondere als Teil eines Gebäude- oder Raumplans.

Im Rahmen des Verfahrens erfolgen weiter die Schritte Abrufen einer Menge von zu vermessender und/oder zu markierender Objektpunkten des Objekts aus dem Speicher, von der ersten Positionierung aus Vermessen und/oder Markieren von Objektpunkten der Menge von Objektpunkten, welche von der ersten Positionierung aus mittels des Freistrahls vermessbar und/oder markierbar sind, basierend auf der Zielrichtung, Ermitteln fehlender Objektpunkte der Menge von Objektpunkten, Versetzen des Vermessungsgeräts an eine zweite Positionierung in der Umgebung des Objekts, automatisches Bestimmen der zweiten Positionierung durch das Vermessungsgerät von der zweiten Positionierung aus basierend auf der Kenntnis der ersten Positionierung, so dass die zweite Positionierung bekannt ist, und Vermessen und/oder Markieren mittels des Freistrahls von fehlenden Objektpunkten von der zweiten Positionierung aus.

Erfindungsgemäß wird ein für die zweite Positionierung geeigneter Positionierungsvorschlag vor dem Versetzen zumindest ungefähr von der Steuerung des Vermessungsgeräts, basierend auf hinterlegten Positionen, ermittelt und der Positionierungsvorschlag einem Benutzer auf einem Display angezeigt.

Als Kriterium, nach welchen der Positionierungsvorschlag berechnet wird, dient optional ein berechneter (theoretischer) Auftreffwinkel des Freistrahls auf der Objektoberfläche, die einen noch zu vermessenden Objektpunkt enthält. Für derartige Vermessungen oder Markierungen ist ein senkrechtes Auftreffen optimal. Deshalb wird eine Positionierung gesucht, welche ein senkrechtes oder zumindest möglichst senkrechtes Auftreffen ermöglicht, entweder für einen jeweiligen oder den wichtigsten zu erzielenden Objektpunkt oder für eine Menge von Objektpunkten, dann z.B. in Form eines Optimums für den Mittelwert aller Auftreffwinkel aller Objektpunkte der Menge.

Als weitere Option wird beim Ermitteln des Positionierungsvorschlags eine Information über eine Zielrichtung zu wenigstens einer der nicht markierbaren Positionen berücksichtigt.

Erfindungsgemäß erfolgt die Anzeige des Positionierungsvorschlags in grafischer Form erfolgt, insbesondere eingebettet in eine Visualisierung eines Gebäude- oder Raumplans oder eingebettet in ein vor Ort aufgenommenen 2D- oder 3D-Panoramabild der Umgebung und/oder als augmented reality-Darstellung in einem Live-Videobild der Umgebung, z.B. angezeigt auf einer AR-Brille.

In einer Fortbildung des Verfahrens erfolgt das automatische Bestimmen der zweiten Positionierung anhand eines vom Vermessungsgerät in der zweiten Positionierung erstellten Umgebungsabbilds, insbesondere wobei das Umgebungsabbild mittels eines Kamerabilds des Vermessungsgeräts und/oder eines mittels des Freistrahls durchgeführten Laserscans erstellt wird. Optional wird im Rahmen des automatischen Bestimmens der zweiten Positionierung das Umgebungsabbild der zweiten Positionierung mit einem in der ersten Positionierung erstellten Umgebungsabbild verglichen, insbesondere wobei in beiden Umgebungsabbildern ersichtliche und von der ersten Positionierung aus markierte Positionen als Positionsreferenz dienen und/oder mit einem hinterlegten digitalen Gebäude- oder Raumplan verglichen.

Alternativ oder zusätzlich erfolgt das automatische Bestimmen der zweiten Positionierung mittels eines structure-from-motion Algorithmus anhand von Messdaten einer Inertial-Measurement-Unit des Vermessungsgeräts und/oder einer Folge von mit dem Vermessungsgerät aufgenommener Kamerabilder.

Die vorliegende Erfindung beinhaltet des Weiteren ein Computerprogrammprodukt oder ein Computer-Datensignal, das verkörpert ist durch eine elektromagnetische Welle, mit Programmcode, zur Steuerung bzw. Durchführung eines solchen Verfahrens zum Vermessen und/oder Markieren von Punkten auf einem Objekt anhand geplanter Positionen zu Bautätigkeitszwecken.

Die Erfindung betrifft zudem ein stationäres Vermessungsgerät zum Vermessen und/oder optischen Markieren von Punkten auf einem Objekt anhand geplanter Positionen zu Bautätigkeitszwecken, wobei das Vermessungsgerät aufweist eine Basis, eine eine Zielrichtung definierende und gegenüber der Basis um wenigstens eine Achse, insbesondere zwei zueinander orthogonale Achsen, schwenkbare Anzieleinheit, insbesondere ein Zielfernrohr, eine Strahlquelle, insbesondere Laserquelle, zur Strahlungserzeugung, sowie eine Optik zur Emission der Strahlung als Freistrahl in Zielrichtung, insbesondere einen Entfernungsmesser sowie einer Entfernungsmessfunktionalität zur Messung einer Zielentfernung in Zielrichtung, und wenigstens einen Winkelmesser sowie eine Winkelmessfunktionalität zur Messung der Zielrichtung. Weiter weist das Gerät auf eine Steuerung mit Einzelpunktbestimmungsfunktionalität und einen Speicher, in dem eingegebene oder vermessene Positionen hinterlegbar sind, insbesondere als Teil eines Gebäude- oder Raumplans, wobei die Steuerung ausgebildet ist zur Ausführung des oben beschriebenen Verfahrens zum Vermessen und/oder Markieren von Punkten auf einem Objekt anhand geplanter Positionen zu Bautätigkeitszwecken.

Die vorliegende Erfindung wird nachfolgend anhand von den in den Zeichnungen schematisch dargestellten Ausführungen und Anwendungsvorgängen näher beschrieben.

Im Einzelnen zeigen
- Fig.1: ein Beispiel für ein Vermessungssystem mit Messhilfsinstrument mit sphärischer Codierung,
- Fig.2a-d: ein Beispiel für einen Bildauswertevorgang hinsichtlich Decodierung,
- Fig.3: ein Beispiel für eine Ausführungsform einer Codierung,
- Fig.4a,b: ein Beispiel für ein Vermessungssystem mit Kalottenmessfunktonalität,
- Fig.5a,b: Beispiele für Verfahren zur Positionsbestimmung mittels Erstellen einer Kalotte,
- Fig.6: ein Beispiel für ein Vermessen mit Hilfe einer Kalottenmessfunktonalität
- Fig.7a-c: eine Fortbildung des Vermessungssystems mit Kalottenmessfunktonalität,
- Fig. 8a,b: ein erstes Ausführungs- und Anwendungsbeispiel eines stiftartigen Messhilfsinstruments,
- Fig. 9a-e: weitere Ausführungsformen eines stiftartigen Messhilfsinstruments,
- Fig. 10: ein erstes Beispiel für einen Laserreceiver mit Markierfunkionalität,
- Fig. 11: ein Beispiel für einen Laserreceiver bzw. Baustellendrucker mit Positionsgeber,
- Fig. 12: ein weiteres Beispiel für einen Laserreceiver bzw. Baustellendrucker mit Positionsgeber, und
- Fig. 13a-c: ein Beispiel für ein Verfahren zum Vermessen und/oder Markieren von Objektpunkten mit Versetzen des Vermessungsgeräts.

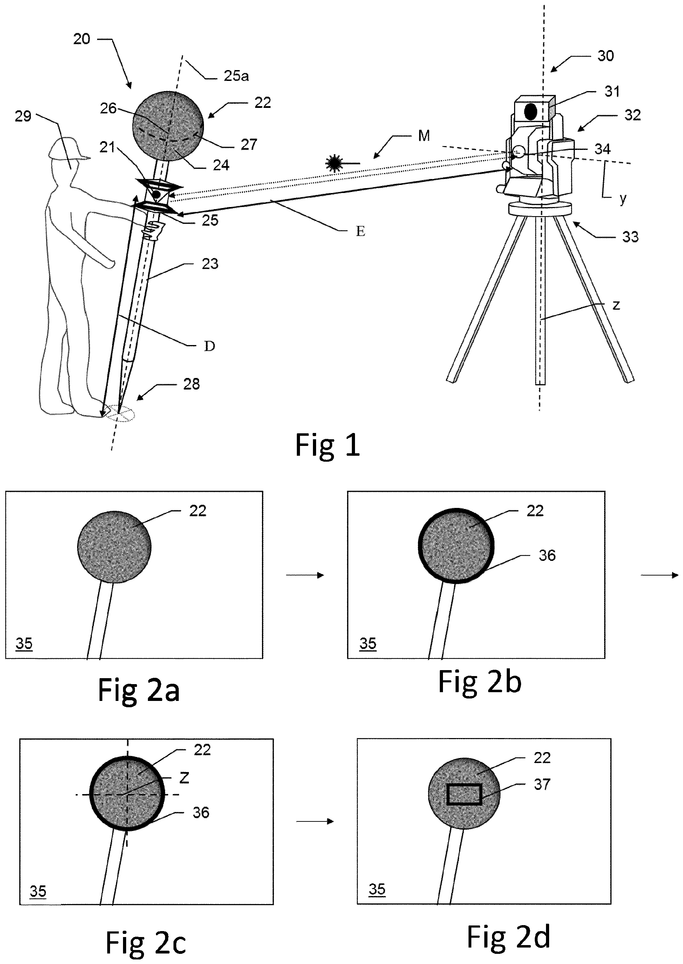

Figur 1 zeigt rein schematisch ein Beispiel für ein Vermessungssystem mit Messhilfsinstrument mit sphärischer Codierung. Das System weist ein von einem Benutzer tragbares Messhilfsinstrument 20 auf, ausgebildet als ein Lotstab. Das Instrument 20 hat einen länglichen Körper 23 mit einer Längsachse 25a. Der Lotstab 20 bzw. die Längsachse ist händisch von einem Benutzer 29 auf einen zu vermessenden oder abzusteckenden Geländepunkt 28 ausrichtbar, so dass mit Hilfe des Messhilfsinstruments 20 der Geländepunkt 28 anzielbar ist. Ein solcher Geländepunkt 28 befindet sich dabei z.B. im Freien oder innerhalb eines Gebäudes. Die Distanz D von einem Referenzpunkt 21 des Lotstabs 20 zum Geländepunkt 28 ist dabei vorbekannt und in einem Speicher des Vermessungssystems hinterlegt. Alternativ zur Darstellung sind auch Messhilfsinstrumente 20 bekannt, die berührungslos, z.B. mittels eines Laserdistanzmessers, den Geländepunkt 28 anzielen und die nun variable Distanz vom Referenzpunkt 21 zum Geländepunkt 28 messen und einem Speicher bzw. einer Auswertung zuführen.

Das Vermessungssystem weist weiter eine Vermessungsgerät 30 auf, z.B. eine Totalstation. Das Vermessungsgerät 30 weist eine Basis 33 auf und einen auf der Basis 33 relativ zu dieser in Bezug auf eine vertikale Achse z schwenkbar angeordneten Aufsatz 32. Der Aufbau 33 weist eine Anzieleinheit 34 auf, welche bezüglich einer horizontalen Achse y drehbar ist. Somit ist die Ausrichtung der Anzieleinheit 34 oder die Zielrichtung durch Drehung um die zwei Achsen z und y variierbar, wobei die jeweils vorliegende Ausrichtung durch Winkelencoder gemessen wird.

Die Anzieleinheit 34 beinhaltet eine Lichtquelle, z.B. einen Laser, welche Messstrahlung erzeugt, die mit Hilfe einer entsprechenden Optik als Messstrahl M, z.B. als Laserstrahl, gerichtet auf das Messhilfsinstrument 20 bzw. genauer auf ein Ziel 25 des Messhilfsinstruments emittiert wird. Das Ziel 25 steht dabei in bekannter räumlicher Relation zum Referenzpunkt 21, im Beispiel dadurch, dass das Zentrum des Ziels 35 mit dem Referenzpunkt 21 zusammenfällt. Anhand der Messstrahlung wird die Entfernung E von Totalstation zum Messhilfsinstrument 20 bzw. zum Referenzpunkt 21 bestimmt, z.B. mit Hilfe einer Laufzeit von Messstrahlpulsen und/oder nach interferometrischem Prinzip. Üblicherweise wird dabei das emittierte Licht vom Ziel 25 retroreflektiert, so dass es vom Vermessungsgerät 30 empfangbar und mittels eines Detektors detektierbar ist.

Aus Kenntnis der Emissionsrichtung, der Entfernung E und der Distanz D ist somit die Position des Geländepunkts 28 relativ zum Vermessungsgerät 30 (bzw. genauer zu einem Referenzpunkt des Vermesssungsgeräts 30) bestimmbar. Ist die Position des Vermessungsgeräts 30 in Bezug auf ein äusseres Koordinatensystem bekannt, kann somit auch die Position des Geländepunkts 28 in diesem Koordinatensystem bestimmt werden. Im Falle einer geodätischen Vermessung ist das Koordinatensystem z.B. das UTM-Koordinatensystem.

Neben den genannten Grössen ist allerdings zur eindeutigen Bestimmung der Geländepunktposition auch die Kenntnis der Ausrichtung und Neigung des Messhilfsinstruments 20 (relativ zum Vermessungsgerät 30 bzw. in Bezug auf das Koordinatensystem) notwendig. Dies ist dadurch erreichbar, dass der Lotstab 20 immer senkrecht auf dem Geländepunkt 28 positioniert wird, so dass die Orientierung vorbekannt ist. Diese vorbestimmte Haltung des Messhilfsinstrument 20 ist jedoch nicht immer möglich, z.B. bei Hausecken als Geländepunkt 28, oder ist zumindest kaum vom Benutzer 29 exakt einhaltbar, vor allem -aber nicht nur- bei Vorliegen eines berührungsfrei arbeitenden Messhilfsinstruments 20.

Deshalb weist das Messhilfsinstrument 20 einen Aufsatz 22 auf, mit dessen Hilfe die Orientierung des Messhilfsinstruments 20, d.h. Neigungs-, Roll-, und Gier- bzw. Azimutalwinkel, bestimmbar ist. Der Aufsatz 22 hat die Form einer Kugel, die in bekannter räumlicher Bezugsrelation zur Längsachse 25a am Körper 23 angeordnet ist, im Beispiel indem das Zentrum 26 der Kugel auf der Längsachse 25a liegt, wodurch die Längsachse 25a als Nord-Süd-Achse der Kugel angesehen werden kann und somit ein Äquator 27 der Kugel festgelegt ist.

Auf der Kugeloberfläche verteilt ist ein optischer, zweidimensionaler Code 24 angeordnet. Von der Kugel 22 bzw. dem Code auf deren Oberfläche wird ein Bild mittels einer definiert angeordneten Kamera 31 des Vermessungsgeräts 30 aufgenommen (die Kamera 31 kann alternativ zur Darstellung in Figur 1 z.B. auch als on-axis-Kamera ausgebildet sein, also ohne Versatz zur optischen Achse der Anzieleinheit 34). Der Code 24 ist derart ausgebildet, dass mittels Bildauswertung des Kamerabilds die Orientierung der Kugel 22 und damit des Vermessungsstabs 20 relativ zur Kamera 31 und damit relativ zum Vermessungsgerät 30 eineindeutig ermittelbar ist. D.h. die Neigung der Längsachse 25a und ihre Ausrichtung (Drehstellung des Messhilfsinstrument 20 um die Längsachse 25a) werden anhand eines vom Vermessungsgerät 30 aus sichtbaren Code(ausschnitts) mittels Bildauswertung/-verarbeitung eineindeutig bestimmt.

Der Code 24 läuft zumindest in einer zur Längsachse 25a senkrechten und durch den Kugelmittelpunkt 26 laufenden Ebene rund um die Oberfläche rundum, so dass von einer jeglichen Seitenansicht Code 24 sichtbar und damit die Orientierung eineindeutig bestimmbar ist. Im Beispiel ist der Code 24 sogar über die gesamte Kugeloberfläche verteilt und derart ausgebildet, dass in einer jeglichen Lage (abgesehen z.B. von Verdeckungen durch den Grundkörper) des Messhilfsinstruments 20 diese Lage bestimmbar ist. Alternativ sind z.B. ein oberer und unterer Bereich der Kugel codefrei oder die Kugel 22 ist oben und unten abgeschnitten (d.h. beide "Polkappen" der Kugel 22 sind nicht mit Code bedruckt bzw. gar nicht vorhanden), in der Annahme, dass extreme Neigungen des Messhilfsinstruments 20 bzw. der Längsachse 25a, z.B. um mehr als 60° bezogen auf die Vertikale z, in der Annahme, dass in der für das betreffende Messhilfsinstrument 20 bzw. Vermessungssystem vorgesehenen Anwendung nicht vorkommen und deshalb nicht bestimmbar sein müssen.

Als (nicht dargestellte) Option weist der Stab 20 zusätzlich ein Licht zur Beleuchtung des Aufsatzes 22 auf, so dass der Aufsatz 22 oder genauer der Code 24 auch bei schlechten äusseren Lichtverhältnissen im Kamerabild ausreichend gut sichtbar ist. Hierfür ist die Kugel 22 z.B. als durchleuchtbarer Hohlkörper ausgebildet, in dessen Inneren eine Lichtquelle befindlich ist, so dass die Kugeloberfläche von innen her beleuchtet wird.

Als weitere Option dient der Kugelaufsatz 22 zusätzlich als Schutzkörper zum Abfangen eines Aufpralls des Messhilfsinstruments 20. Hierzu ist die Kugel 22 z.B. wie in Figur 1 dargestellt am oberen Ende des Stabs 20 positioniert und von solch grossem Durchmesser, dass bei einem Umfallen des Lotstabs 20 aus der aufrechten Aufstellung der Pole 20 mit der Kugel 22 auf dem Boden auftrifft, welche z.B. aus elastischem oder sonstigem bruchsicherem Material gefertigt ist oder zumindest eine Schutzschicht aus derlei Material aufweist. Die restlichen Teile des Messhilfsinstruments 20 sind damit durch die Kugel 22 vor derlei mechanischen Beschädigungen geschützt.

Als zusätzliche Option ist das Ziel 25 im Aufsatz 22 integriert. Beispielsweise sind über die Kugeloberfläche retroreflektierende Elemente verteilt (z.B. in Form einer retroreflektierenden Folie oder Schicht oder einzelner Retroreflektoren, die segmenthaft ähnlich wie bei einem Fussball verteilt sind), die die Funktion des Retroreflektors 25 erfüllen. Als weitere Alternative erfolgen Richtungs- und Entfernungsbestimmung beispielsweise bildbasiert, indem der Kugelaufsatz 22 bzw. der Code 24 nicht nur zur Orientierungsbestimmung, sondern auch zur Positionsbestimmung und somit als Ziel 25 dient. Hierzu wird z.B. anhand der Grösse der Kugel 22 und/oder von Code im Bild im Abgleich mit der bekannt tatsächlichen Grösse die Entfernung ermittelt und die Richtung anhand der Position der Kugel 22 und/oder von Code im Bild. Bei dem Code handelt es sich entweder um den gleichen Code, der auch die Orientierung codiert, somit also eine Doppelfunktion erfüllt, oder um zusätzlichen, rein zur Positionscodierung dienenden Code.

Die Figuren 2a-2d zeigt ein Beispiel für einen Bildauswertevorgang eines Kamerabilds 35, welches von der Vermessungsgerätkamera aufgenommen ist. Im Bild 35 ist ein Teil des Messhilfsinstruments abgebildet, darunter den Kugelaufsatz 22 (s. Figur 2a).

Im Bild wird nun eine Kreisgeometrie 36 mittels eines an sich bekannten Algorithmus möglichst gut der abgebildeten Kreisform der Kugel 22 angepasst ("gefittet"), wie in Figur 2b angedeutet.

In Figur 2c ist dargestellt, wie aufgrund des bekannten Mittelpunkts der Kreisgeometrie 36 das Zentrum Z der abgebildeten Aufsatzkugel 22 bestimmt wird.

Zur eigentlichen Codeauswertung oder Decodierung wird nun ein Bereich oder Ausschnitt 37 des Bilds 35 bzw. der abgebildeten Oberfläche der Kugel 22 herangezogen, welcher im Zentrum Z gelegen ist bzw. einen mittigen Ausschnitt der Kugeloberflächenabbildung darstellt (s. Figur 2d).

Mit anderen Worten wird im Bild die Silhouette der Kugel im Bild bestimmt und im deren Schwerpunkt eine Region of Interest (Rol) ermittelt, welche zur Decodierung und damit Orientierungsbestimmung herangezogen wird. Das Abstellen bzw. Beschränken auf einen in der Mitte Z der Abbildung angeordneten Abschnitt 37 des Codes hat den Vorteil, dass damit der Einfluss von Verzerrungen der dreidimensionalen Kugeloberfläche im zweidimensionalen Kamerabild 35 möglichst klein gehalten wird, insbesondere soweit, dass er vernachlässigbar ist und die bei der Decodierung nicht berücksichtigt werden muss. D.h. der Ausschnitt 37 ist so gewählt, dass einerseits ausreichend Code zur eineindeutigen Bestimmung der Lage der Kugel relativ zur Kamera oder der Totalstation im Ausschnitt 37 sichtbar/verfügbar ist, andererseits die Bildauswertung sich nicht von einer Auswertung eines Codes unterscheiden muss, welcher auf einer Ebene angeordnet ist, die sich senkrecht zur Aufnahmerichtung bzw. parallel zur Bildebene befindet.

Als Option erfolgt ein Bestimmen der Lage des Zentrum Z im Bild bzw. der Abweichung der Lage von einer Sollposition z.B. von der Mitte des Bildes. Anhand dieses Versatzes wird dann die Zielrichtung des Vermessungsgeräts nachgeführt, so dass das Zentrum Z auf die Sollposition fällt. Dies ermöglicht ein genaues Ausrichten der Zielrichtung oder im Falle eines sich bewegenden Messhilfsinstruments ein Zielverfolgen (Tracking).

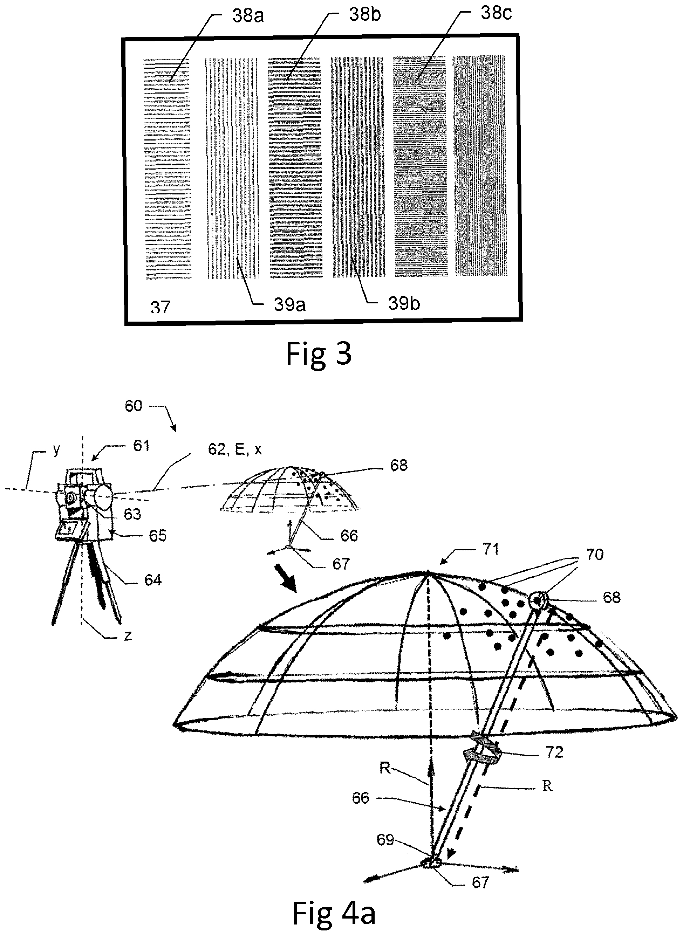

Figur 3 zeigt rein schematisch ein Beispiel für einen Code, anhand dessen in einem Ausschnitt 37 (vgl. Figur 2d) eineindeutig die Orientierung des Kugelaufsatzes und damit des Messhilfsinstrument bestimmbar ist. Im Beispiel ist der Code dergestalt zweiteilig, dass er erste Codeelemente 38a-38c aufweist, welche zur eineindeutigen Codierung einer ersten Richtung dient, z.B. der Länge (bez. des Äquators 27 aus Figur 1). Weiter sind zweite Codeelemente 39a-39c vorhanden, welche die Breite als zweite Richtung eineindeutig codieren. Somit ergeben sich durch Decodierung beider Codeteile 38, 39 eineindeutig, welcher "Ort" auf der Kugel im Ausschnitt 37 zu sehen ist und damit die Orientierung der Kugel relativ zum Bild(ausschnitt).

Im Beispiel ist der Code dabei dergestalt, dass bereits jeweils ein Element 38a, 38b oder 38c bzw. 39a, 39b, 39c alleine im Prinzip eineindeutig die Länge bzw. Breite codiert. Das dargestellte Vorhandensein jeweils dreier Codeelemente 38a-c, 39a-c dient zur Bereitstellung verschiedener Auflösungsstufen, so dass aus unterschiedlichen Entfernungen Kamera-Kugel ähnliche Auflösungen ermittelbar sind und somit über alle Messentfernungen gleiche Genauigkeit der Orientierungsbestimmung vorliegt. Z.B. dient ein jeweiliges Element 38a und 39a mit vergleichsweise grober Struktur für grosse Entfernungen, ein jeweiliges Element 38b und 39b mit mittlerer Auslösung für mittlere Entfernungen und ein jeweiliges Element 38c und 39c mit feiner Struktur für kleine Entfernungen bzw. Messungen im Nahbereich. Somit ist ein solcher Code auch zur Verwendung mit Vermessungsgeräten mit zoomfreien Kameras geeignet.

Alternativ oder zusätzlich dient eine solche Codeteilung mit feineren und gröberen Codeelementen zur Steigerung der Robustheit der Messung durch Bereitstellung von Redundanz und/oder zur Bereitstellung von Grob- (Mittel-) und Feinauflösung. Beispielsweise wird anhand des Codestreifens 38a in einem ersten Schritt eine grobe, eineindeutige Länge bestimmt, welche in einem zweiten Schritt durch den Codestreifen 38b und/oder 38c verfeinert wird, wozu die Codestreifen 38b und/oder 38c nicht eineindeutig codieren müssen.

Die Codeelemente 38, 39 zur Codierung zweier verschiedener Richtungen können wie im Beispiel angedeutet durch unterschiedliche Geometrien unterschieden sein. Alternativ oder zusätzlich unterscheiden sie sich durch unterschiedliche Farben, z.B. indem die Längencodierung 38 in Grün gestaltet ist und die Breitencodierung 39 in Rot. Derart unterschiedliche Farben erleichtern z.B. auch eine (im Unterschied zur Darstellung) sich überlagernde Anordnung von Codeelementen, so dass der begrenzte Platz der Kugeloberfläche dichter belegbar ist.

Figur 4a zeigt schematisch ein Beispiel für ein Vermessungssystem 60, welches eine Kalottenmessfunktonalität besitzt. Das Vermessungssystem 60 weist ein Vermessungsgerät 61 auf, ausgebildet z.B. eine Totalstation, und ein vom Vermessungsgerät 60 optisch anzielbares Messhilfsinstrument 66, ausgebildet z.B. als Lotstab mit Retroreflektor. Das Vermessungsgerät 61 weist eine Basis 64 auf sowie einen auf der Basis 64 angeordnetes Oberteil 65, welches um eine Achse z relativ zur Basis 64 drehbar ist. Das Oberteil 65 wiederum hat eine definierte Kippachse y, um welche eine Anzieleinheit 63 schwenkbar ist. Die Anzieleinheit 63 ist beispielsweise ausgebildet als Zielfernrohr. Die Zielvorrichtung 63 definiert eine Zielrichtung x, die durch das Verschwenken um die beiden Achsen z, y variierbar ist. Zum Bestimmen der jeweils vorliegenden Zielrichtung y weist das Vermessungsgerät wenigstens einen Winkelmesser auf, beispielsweise um die Drehstellung um die Achsen y und z festzustellen.

Das Messhilfsinstrument 66 des Vermessungssystems 60 weist ein Ziel 68 auf, welches vom Vermessungsgerät 61 mittels der Zielvorrichtung 63 anzielbar ist und zudem mittels eines Entfernungsmessers des Vermessungsgeräts 61 eine Entfernung E (in Zielrichtung x) messbar ist. Im Beispiel wird dazu ein Messstrahl 62 vom Vermessungsgerät 61 in Zielrichtung x emittiert, vom Ziel 68 retroreflektiert, der zurückgestrahlte Messstrahls 62 vom Vermessungsgerät 61 detektiert und z.B. mittels Fizeau-Prinzip, Laufzeitmessung oder interferometrisch die Entfernung E bestimmt. Aus dem Stand der Technik sind z.B. alternative bildbasierte Zielpositionsbestimmungsverfahren bekannt, in denen das Ziel 68 spezifische Merkmale aufweist, mit Hilfe derer anhand eines Bilds des Ziels 68, welches mit einer Kamera des Vermessungsgeräts 61 aufgenommen ist, Entfernung und Orientierung des Ziels 68 messbar sind (d.h. die Kamera zusammen mit einem entsprechenden bildauswertenden Algorithmus bildet den Entfernungsmesser). Weitere Alternativen sind z.B. Stereometrie oder Range-Images. Aus Kenntnis der Entfernung E und der Zielrichtung x ist somit jedenfalls die Position des Ziels 68 relativ zum Vermessungsgerät 61 und bei bekannter absoluter Position des Vermessungsgeräts 61 auch die absolute Position des Ziels 68 bestimmbar.

Die Zielposition wiederum dient zur Bestimmung der Position eines Geländepunkts 67, welche z.B. im Rahmen geodätischer Vermessungen oder im Rahmen von Bautätigkeiten vermessen werden soll. Um von der Zielposition eindeutig auf die Position des Geländepunkts 67 schliessen zu können, muss sich da Ziel 68 in eindeutiger Relativposition zum Geländepunkt 67 befinden. Dies wird in aus dem Stand der Technik bekannten Vermessungssystemen 60 bzw. Vermessungsverfahren dadurch erreicht, dass sich das am Messhilfsinstrument 66 angebrachte Ziel 68 im definierten, bekannten Abstand zum Ende des Messhilfsinstruments 66 befindet, welches den Geländepunkt 67 kontaktiert und somit auch im bekannten Abstand zum Geländepunkt 67. Weiter wird das Messhilfsinstrument 66 lotrecht auf dem Geländepunkt 67 aufgestellt, so dass sich das Ziel 68 senkrecht über dem Geländepunkt 67 befindet. Dadurch sind die Zielposition und die Geländepunktposition eindeutig verknüpft. Nachteilig an dieser Methode ist, dass eine lotrechte Ausrichtung nicht einfach einzuhalten und sogar nicht immer möglich ist, z.B. weil der Geländepunkt 67 eine innere oder äussere Ecke eines Gebäudes ist.

Dieser Nachteil wird dadurch behoben, dass das Vermessungssystem 60 eine Kalottenmessfunktionalität aufweist, wie anhand des unteren Teils der Figur 4a im Folgenden näher erläutert wird. Das Messhilfsinstrument 66 wird mit seinem Kontaktende 69 auf dem Geländepunkt 67 positioniert. Ohne die Kontaktierung zu lösen, d.h. das Kontaktende 69 verbleibt fix auf dem Geländepunkt 67, wird nun das Messhilfsinstrument 66 und damit das an seinem anderen Ende angebrachte Ziel 68 verschwenkt. Das Ziel 68 nimmt damit unterschiedliche Zielpositionen 70 ein, die aufgrund der starren Verbindung mit dem Geländepunkt 67 alle mit dem Geländepunkt 67 verknüpft sind.

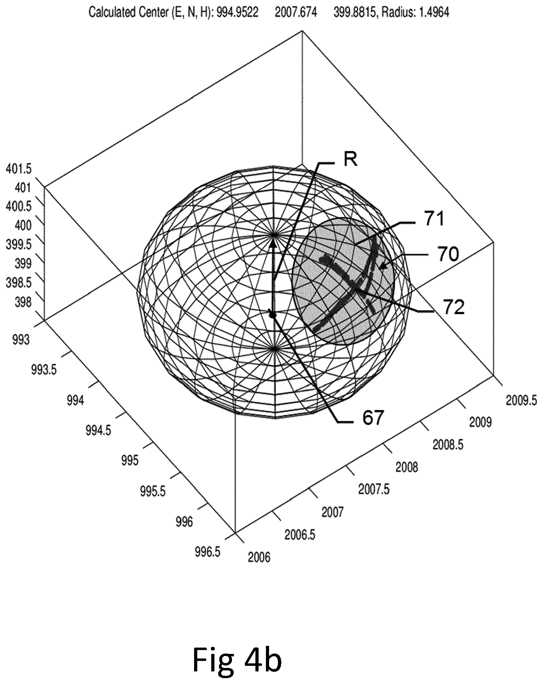

Wie in Figur 4a als auch in Figur 4b illustriert, lässt die Verschwenkbewegung 72 mit dem fixen Abstand R zwischen Ziel 68 und Punkt 67 das Ziel 68 verschiedene Zielpositionen 70 einnehmen, welche nicht-komplanar zueinander sind und allesamt auf einer Oberfläche einer Kugel bzw. Kugeloberflächenausschnitt oder Kalotte 71 befindlich sind, deren Mittelpunkt der gesuchte Geländepunkt 67 ist. Somit lässt sich aus Kenntnis der Kalotte 71 die gesuchte Position des Geländepunkts 67 bestimmen.

Hierzu werden mittels des Vermessungsgeräts 61 entweder mindestens vier oder mindestens drei der unterschiedlichen Zielpositionen 70 bestimmt, anhand derer die Kalotte 71 berechnete wird, z.B. mittels eines best-fit-Algorithmus zur Minimierung der Abstandsquadrate der Zielpositionen 70 zu Kugeloberfläche. Das Erzeugen der Zielpositionen 70 erfolgt entweder manuell oder in dem Sinn automatisch, dass eine optional vorhandene, prinzipiell bekannte automatische Zielverfolgung des Vermessungsgeräts 61, im Rahmen der Kalottenmessfunktionalität genutzt wird, um die Zielrichtung x automatisch dem Verschwenken des Ziels 68 folgend zu verändern und dabei fortlaufend Zielpositionen bzw. Kalottenpunkte 70 zu bestimmen. Das fortlaufende Bestimmen von Zielpositionen erfolgt dabei beispielsweise mit einer zuvor festgelegten Messrate, z.B. alle Zehntel-, halbe oder jede Sekunde oder -evtl. dynamisch- angepasst an eine, z.B. anhand von wenigstens zwei gemessenen Zielpositionen und deren Zeitabstand, gemessene Geschwindigkeit der Verschwenkbewegung.

Drei Zielpositionen 70 sind prinzipiell bereits für ein Berechnen der Kalotte 71 ausreichend, wenn der Abstand R Ziel 68 - Geländepunkt 67, also der Kugelradius R bekannt ist, also z.B. in einem Speicher einer Auswerteeinheit des Vermessungssystems dieser Abstand bzw. die Höhe des Lotstabs 66 hinterlegt ist. Anhand von vier statt nur drei Zielpositionen 70 lässt sich auch ohne Wissen um den Abstand bzw. Kugelradius R die Kalotte bzw. der Kugelmittelpunkt 67 eindeutig berechnen. Ein hinterlegter Abstand R wird in einem solche Fall optional zur Steigerung der Robustheit der Positionsbestimmung verwendet oder zur Verifizierung, beispielsweise indem ein anhand der wenigstens vier Zielpositionen 70 ermittelte Kugelradius R mit dem hinterlegten Abstand verglichen wird, um das Ausmass etwaiger Abweichungen zu bestimmen.

Ein solches Abweichungsausmass wird dabei als weitere Option als ein Mass zur Beurteilung der Qualität der Kalotten- bzw. Positionsberechnung herangezogen. Je geringer die Abweichung, desto besser ist die Qualität. Alternativ oder zusätzlich wird eine andere Art der Überbestimmtheit der Kalotte verwendet, um ein Qualitätsmass bereitzustellen. Liegen mehr als die drei bzw. vier Mindestzielpositionen 70 vor, mit welchen die Kalotte 71 bzw. der Mittelpunkt 67 berechnet ist, wird anhand der "überzähligen" Zielpositionen die Genauigkeit oder Qualität der berechneten Kalotte 71 ermittelt.

Die Beurteilung der Qualität z.B. anhand eines Qualitätsmasses erfolgt dabei automatisch und/oder durch einen Benutzer, wie anhand der folgenden Figuren weiter ausgeführt.

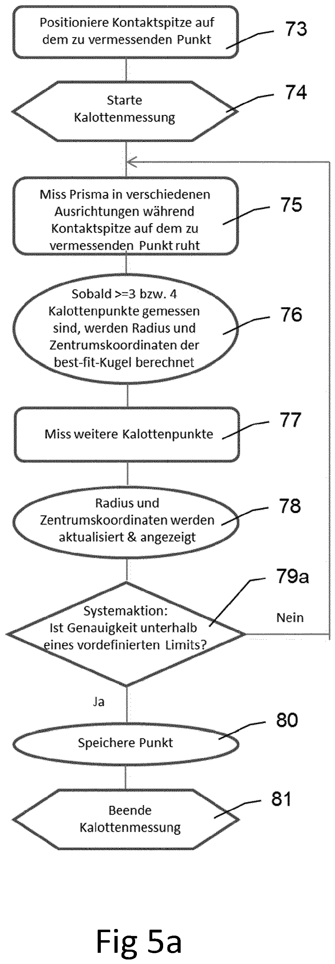

Die Figur 5a zeigt ein erstes Beispiel für ein Verfahren zur Positionsbestimmung mittels Erstellen einer Kalotte. Im Schritt 73 wird das Kontaktende des Messhilfsinstruments in physischen Kontakt auf dem Geländepunkt gebracht. Anschliessend wird in Schritt 74 die Kalottenmessfunktionalität gestartet. Das Messhilfsinstrument wird um den Geländepunkt verschwenkt und damit das Ziel in verschiedene Zielpositionen gebracht, die alle den gleichen Abstand zum Geländepunkt aufweisen und diese Zielpositionen (Kalottenpunkte) mit Hilfe des Vermessungsgeräts bestimmt (Schritt 75).

Sobald wenigstens vier (oder bei Verwendung des definierter Zielhöhe bzw. Polelänge wenigstens drei) Kalottenpunkte erstellt sind, werden Radius und Mittelpunkt nach der best-fit-Methode berechnet (Schritt 76) und durch weiteres Bewegen des Ziels und weiteres Zielpositionsbestimmen weitere Kalottenpunkte erzeugt (Schritt 77). Anhand dieser weiteren Zielpositionen werden Radius und Kugelmittelpunkt aktualisiert oder verfeinert und im Beispiel auf einem Display des Vermessungssystems angezeigt, z.B. in Form einer Grafik (Schritt 78). Somit erfolgt in dieser Variante das Bestimmen von Zielpositionen und Berechnen der Kalotte simultan: sobald die Mindestanzahl von beispielsweise vier Zielpositionen vorliegt, wird eine Kalotte berechnet und diese fortlaufend anhand der fortlaufend gelieferten Zielpositionen neu berechnet bzw. verfeinert. Optional wird die vorläufige Kalotte bzw. werden die vorläufigen Kugeldaten von einem Benutzerdisplay des Systems z.B. grafisch dargestellt, so dass der Benutzer bereits während des Kalottenmessvorgangs eine Information über das Messergebnis erhält und dieses ggf. beurteilen und z.B. den Messvorgang beeinflussen, anpassen oder abbrechen kann.

Das Vermessungssystem beurteilt dann im Schritt 79a die Genauigkeit bzw. Qualität der berechneten Kalotte, z.B. anhand eines Qualitätsmasses wie oben genannt. Falls die Genauigkeit ein vorgegebenes Limit unterschreitet, also ausreichende Qualität vorliegt, werden im Schritt 80 die Koordinaten des Kugelmittelpunkts bzw. Geländepunkts dauerhaft abgespeichert und das Kalottenmessen beendet (Schritt 81). Ansonsten wird das Erzeugen von Zielpositionen fortgeführt. Die Kalottenpunkte bzw. Zielpositionen, die zur Berechnung der Kalotten und damit der Geländepunktposition dienten werden für das Verfahren z.B. nur in einem temporären Speicher vorgehalten und nicht dauerhaft abgespeichert, sondern nach endgültigem Bestimmen des Geländepunkts gelöscht.

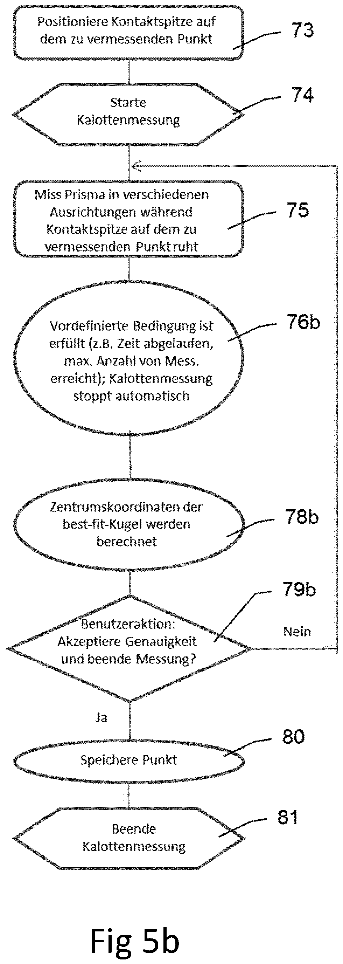

Die Figur 5b stellt eine Variation des Verfahrens gemäss Figur 5a dar. Im Unterschied zum Vorherigen erfolgt eine Überprüfung der Kalotte bzw. von Kugelmittelpunkt und ggf. Kugelradius durch den Benutzer in einem Schritt 79b und durch den Benutzer entschieden, ob die Geländepunktsposition genau oder scharf genug ist oder ob ein weiteres oder erneutes Zielpositionsbestimmen erfolgt, um den Kugelmittelpunkt zu verbessern oder neu zu berechnen.

Im weiteren Unterschied zur Figur 5a erfolgt ein Berechnen der Kalotte bzw. des Kugelmittelpunkts in einem Schritt 78b erst, nachdem das Bestimmen von Zielpositionen in einem Schritt 76b abgeschlossen ist. Als Kriterium, das zur Entscheidung über das Beenden der Zielpositionserfassung dient, wird z.B. eine Zeitdauer und/oder Messwertanzahl herangezogen. Z.B. wird vorgegeben, dass eine bestimmte Mindestmessqualität erreicht oder eine minimale Anzahl von zehn Zielpositionen bestimmt werden soll oder die Messung nach zwei Minuten beendet wird. Dann wird anhand dieser zehn Positionen oder der innerhalb der zwei Minuten ermittelten Positionen die Kalotte berechnet.

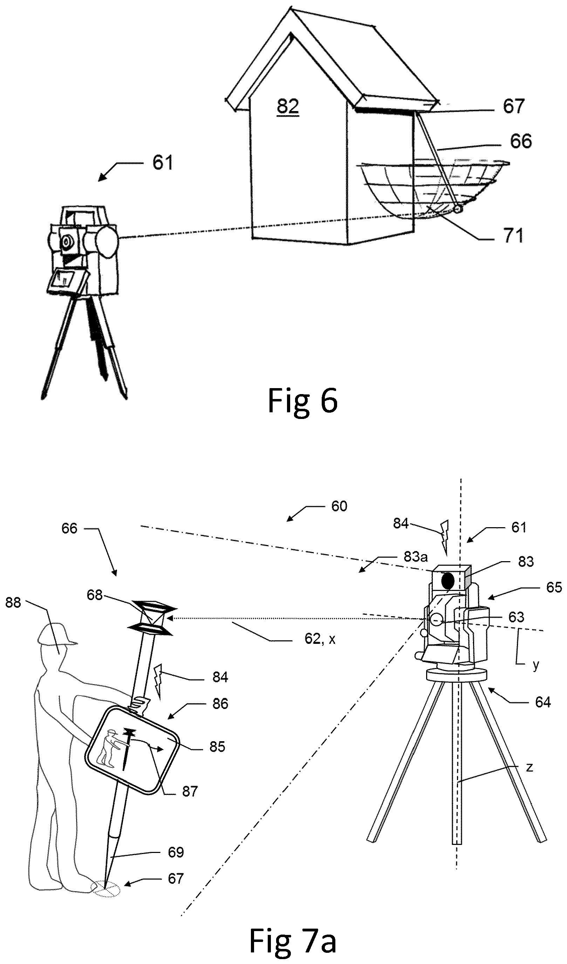

Figur 6 zeigt ein Beispiel, wie vorteilhaft mittels der Kalottenmessfunktionalität ein Geländepunkt 67 vermessen werden kann, welcher mit herkömmlichen Vermessungssystemen nicht oder nur sehr umständlich vermessbar ist. Im Beispiel handelt es sich bei dem Geländepunkt 67 um eine Stelle eines Gebäudes 82 an der Nahtstelle Dach - Wand. Ein lotrechtes Aufstellen des Vermessungsstabs 66 ist dort nicht möglich, jedoch ein Kontaktieren mit dessen Kontaktende und rotierendes Bewegen mit dem Gebäudepunkt als Fixpunkt wie dargestellt. Somit sind die zur Berechnung einer Kalotte 71 notwendigen drei bzw. vier Zielpositionen erzeugbar, anhand derer der Kugelmittelpunkt berechnet wird, wodurch die gesuchte Position des Geländepunkts 67 bestimmt ist.

Die Figuren 7a-c illustrieren eine Fortbildung des Vermessungssystems 60. Im Beispiel ist eine Steuerung des Systems 60 derart ausgebildet, dass auf einem Display 86 des Messhilfsinstruments 66 (s. Figur 7a) dem Benutzer 88 eine, wie dargestellt beispielsweise grafische, Anleitung für das von ihm auszuführende Verschwenken des Messhilfsstabs 66 angezeigt wird. D.h. das System 60 führt den Benutzer 88 im Hinblick auf die Bereitstellung der Positionen des Ziels 68. Das Führen oder Anleiten erfolgt dabei beispielsweise so, dass eine zur Kalottenberechnung optimale Anordnung bzw. Verteilung der Zielpositionen erreicht wird. Z.B. wird der Benutzer 88 angeleitet, das Messhilfsinstrument 66 derart zu Verschwenken, dass eine möglichst homogene oder gleichmässige oder grossflächige Verteilung der Zielpositionen erreicht wird.

Im Beispiel wird zur Bereitstellung einer grafischen Benutzerführung mittels einer Totalstation-Kamera 83, welche ein Blickfeld 83a aufweist, das zumindest grob in Anzielrichtung x ausgerichtet ist, ein Bild 85 des auf dem Geländepunkt 67 aufgestellten Messhilfsinstruments 66 samt Benutzer 88 und einem Ausschnitt der (Mess-)Umgebung aufgenommen. Anhand dieses vom Vermessungsgerät 61 aufgenommenen Bildes 85 werden automatisch oder manuell einzelne anzustrebende Zielpositionen oder ein Zielpositionsbereich festgelegt. Diese werden im Bild grafisch markiert bzw. es wird eine Verschwenkbewegung grafisch im Bild 85 markiert, welche zu den bereitzustellenden Zielpositionen führt (Pfeil 87). Das so präparierte Anleitungsbild 85 wird dann drahtlos (angedeutet durch die Symbole 84) an das Display 86 des Markierstabs 66 übermittelt und dort auf dem Display 86 dem Benutzer 88 angezeigt.

Da das Kamerabild 85 vorteilhaft aus Sicht des Vermessungsgeräts 61 aufgenommen ist, können darin besonders gut die für eine optimale Berechnung einer Kalotte geeigneten Zielpositionen abgeschätzt werden. So kann statt einer generalisierten eine gezielt an die konkret vorliegende Messsituation und räumlichen/örtlichen Gegebenheiten angepasste Anleitung erstellt und dem Benutzer 88 zur Verfügung gestellt werden.

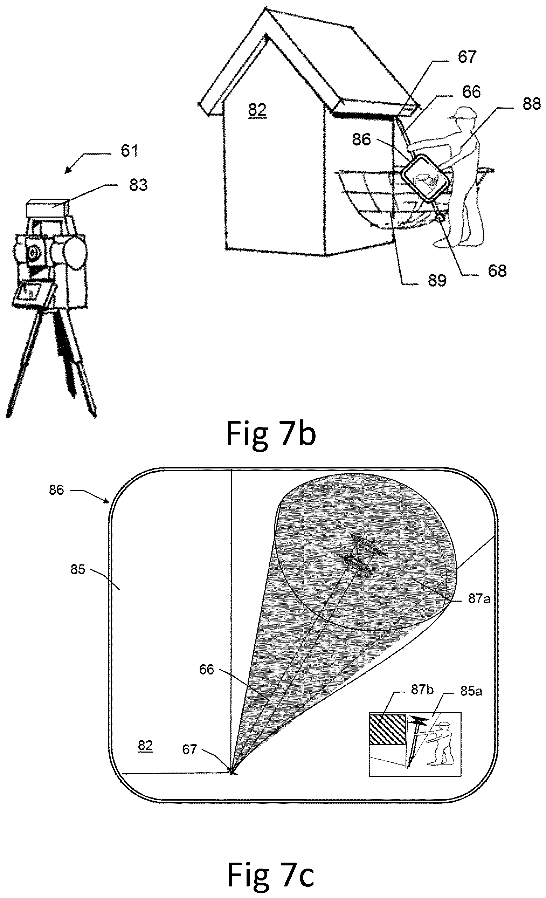

In Figur 7b ist ein solches Ermitteln eines geeigneten Zielpositionsbereiches 89 schematisch dargestellt. Das Vermessungsgerät 61 nimmt von seinem Standort aus mit seiner Kamera 83 ein Bild des Messstandorts um den Geländepunkt 67 auf, welches zumindest den entsprechenden Teil des Gebäudes 82 und den Benutzer 88 samt angelegtem Messhilfsinstrument 66 beinhaltet. Anhand dieser Kameraaufnahme ermittelt die Steuerung des Vermessungssystems einen Bereich 89, innerhalb dessen der Benutzer 88 das Ziel 68 verschwenken soll. Bereiche, die vom Vermessungsgerät 61 z.B. aufgrund Verdeckung durch das Gebäude 82 nicht einsichtig bwz. anzielbar sind, werden so gezielt ausgespart. Vorteilhaft an der Vermessungsgerätperspektive als Grundlage für die Anleitung des Benutzers 88 ist, dass von dort aus sicher eingeschätzt werden kann, welche Raumbereiche oder Stellungen des Messhilfsinstruments für die Kalottenmessung geeignet sind und welche nicht.

Figur 7c stellt ein Beispiel für die grafische anleitende Darstellung auf einem Benutzerdisplay 86 dar. In einem Bild 85 wird anhand eines Bilds der Vermessungskamera künstlich die Perspektive des Benutzers auf die Messumgebung mit Geländepunkt 67, Ecke des Hauses 82 und Messstab 66 nachempfunden. In diesem Bild 85 wird zudem ein Bereich 87a angezeigt, innerhalb dessen der Benutzer das Messhilfsinstrument 66 verschwenken soll. Als nicht dargestellte Option wird dabei stetig aktualisierend angezeigt, welche Teile des Bereichs 87a der Benutzer bereits abgedeckt hat, so dass der Benutzer laufend informiert wird, welcher Abschnitt des Bereichs 87a noch nicht abgedeckt ist. Als weitere Option wird wie dargestellt neben dem die Sicht des Benutzers imitierenden Bild 85 ein weiteres Bild 85a angezeigt (als Bild im Bild), welches zum Beispiel die Sicht des Vermessungsgeräts bzw. dessen Kamera wiedergibt. Auch dieses Bild weist optional eine benutzerführende Information, z.B. wie dargestellt die Anzeige eines Bereichs 87b, der für eine Zielpositionsbestimmung ungeeignet ist, z.B. wegen eines Sichthindernisses, und in den deshalb der Benutzer das Ziel nicht bewegen soll.

Alternativ oder zusätzlich zu einer kamerabildbasierten Anleitung basiert die Anleitung auf der ersten oder den ersten bereits gemessenenen Zielpositionen. D.h. es wird wenigstens eine Zielposition bestimmt und anhand dieser wird z.B. von der Systemsteuerung berechnet, welche weiteren Zielpositionen einzunehmen sind. Als weitere Option wird das Display 86 dazu verwendet, dem Benutzer 88 eine Warnung auszugeben, falls von ihm bereitgestellte Zielpositionen nicht oder nur ungenügend bestimmbar sind bzw. für die Kalottenberechnnung nicht oder nur schlecht geeignet sind. Durch eine solche optische oder auch akustische Warnung kann der Benutzer 88 das Verschwenken korrigieren.

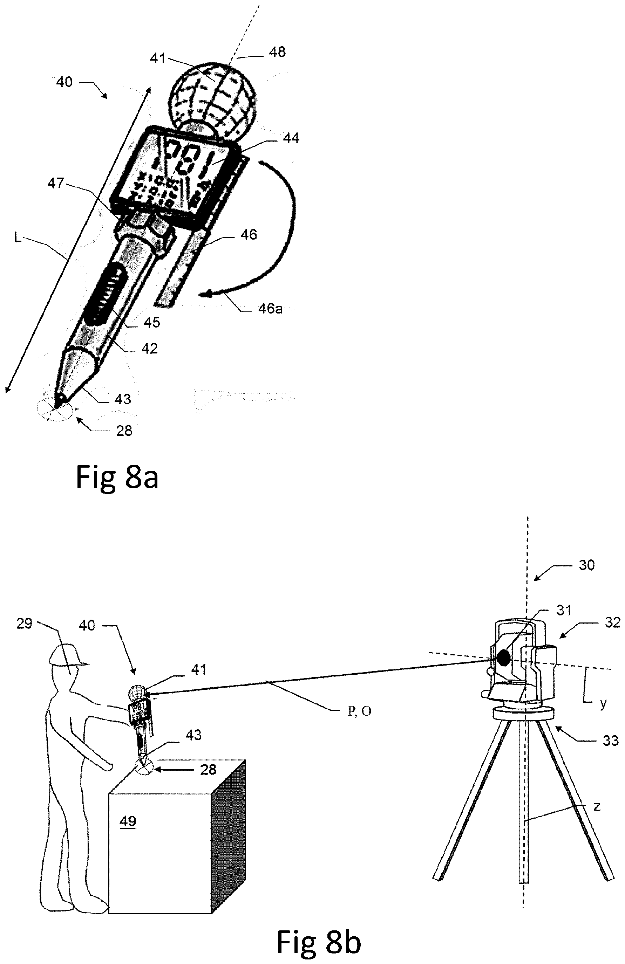

Figur 8a zeigt ein erstes Ausführungsbeispiel eines stiftartigen Messhilfsinstruments 40. Das Messhilfsinstrument 40 lehnt sich in Grösse und Form an einen Stift an; es weist einen länglichen Grundkörper 42 auf, dessen eines Ende als Spitze 43 ausgebildet ist. Diese Spitze 43 ist vorgesehen zum Bezeichnen eines Punktes 28, der mit Hilfe des Messhilfsinstruments 40 vermessen oder abgesteckt werden soll. Das Ende 43 ist im Beispiel als Kontaktspitze ausgeführt, mit der ein jeweiliger Ppunkt 28 durch Berühren bezeichnet wird. Alternativ wird ein solcher unkt 28 kontaktlos bezeichnet, z.B. indem am Ende 43 das sichtbare Licht eines Laserdistanzmessers austritt, mit dem der Punkt 28 punktuell markierbar ist und die Distanz zwischen Messhilfsinstrument 40 bzw. eines Messhilfsinstrumentreferenzpunkts und Punkt 28 misst. Als weitere Option ist der Kontakt zum Bezeichnen des Punkts 28 nicht auf der Längsachse 48 angeordnet, sondern in einem definierten Winkel beabstandet dazu, z.B. rechtwinklig, so dass die Spitze bzw. das Ende 43 L-förmig ist. Eine solche Ausgestaltung kann bei bestimmten Vermessungsaufgaben vorteilhaft sein, z.B. um einen Punkt am inneren Rand eines Rohres, Kanals oder Lochs zu kontaktieren und zu vermessen.

Im abgebildeten Fall ist die Distanz zwischen Referenzpunkt und zu vermessendem oder abzusteckendenm Punkt 28 aufgrund fixer Länge L des Grundkörpers 42 bzw. des Messhilfsinstruments 40 vorbekannt und muss zur Bestimmung der Position des Punkts 28 nicht separat gemessen werden. Gemessen wird jedenfalls die Position und Orientierung des Messhilfsinstruments 40 während des Bezeichnens des Punkts 28 von einem in einer Entfernung stationierten Vermessungsgerät, so dass anhand einer bekannten, absoluten Position des Vermessungsgeräts, der Position und Orientierung des Messhilfsinstruments 40 und der Länge L bzw. der Distanz zwischen Messhilfsinstrument 40 und Punkt 28 die absolute Position des Punkts 28 ermittelbar ist.

Im Beispiel ist als Messhilfe zur Bestimmung von Position und Orientierung des Messhilfsinstruments 40 ein Kugelaufsatz 41 am "oberen" Ende des Messstifts 40 vorhanden. Dieser Kugelaufsatz 41 weist an seiner Oberfläche einen Code auf, welcher in einem (mit dem Vermessungsgerät aufgenommenen) Kamerabild dergestalt auswertbar ist, dass die Orientierung der Kugel 41 relativ zum Bild bzw. zur Kamera (bzw. zum Vermessungsgerät) bestimmbar ist. Anhand der abgebildeten Grösse der Kugel 41 und/oder des Codes und/oder eines weiteren Codes wird zudem die Entfernung zwischen Kamera und Kugel 41 bestimmt, woraus sich zusammen mit einer gemessenen oder bekannten Aufnahmerichtung (und ggf. Position der Kugel bzw. des Kugelzentrums im Bild) die Position der Kugel bestimmbar ist (siehe auch Beschreibung zu Figur 1). Das Messhilfsinstrument 40 weist also wenigstens ein Körper auf, mittels dessen Orientierung und/oder Position des Messhilfsinstruments 40 bestimmbar sind in Zusammenwirkung mit einem externen Vermessungsgerät, mit dem das Messhilfsinstrument 40 ein Vermessungssystem bildet. Optional weist der Stift 40 eine unterstützende intertiale Messeinheit (IMU) auf, um die Lagebestimmung robuster zu machen oder tote Winkel zu überbrücken, in denen Lagebestimmung anhand der Kugel 41 aufgrund Unterbrechung der Sichtlinie nicht möglich ist. Auch kann eine solche IMU in Kombination mit Positionstracking anhand des positionsindizierenden Körpers 41 eingesetzt werden, d.h. bei einer positionsverändernden Bewegung des Stift 40 erfolgt ein Abgleich der IMU-Daten mit den Positionsdaten, die mit dem Vermessungsgerät anhand des Körpers 41 gewonnen sind.

Alternativ zum dargestellten Kugelkörper 41, welcher sowohl Position als auch Orientierungsbestimmung ermöglicht, weist der Messhilfsstift 40 einen Körper auf, welcher Positionsbestimmung mit dem Vermessungsgerät ermöglicht und die Orientierung wird mittels stiftinterner Sensoren bestimmt.

Der Messhilfsstift 40 weist darüber hinaus ein Mensch-Maschinen-Interface auf, welches im Beispiel ein Display 44 aufweist, eine Scroll-Wheel 47 und einen Knopf 45. Das Display dient zur Anzeige von Benutzerinformationen und ist optional berührungssensitiv, um Benutzereingaben zu ermöglichen. Alternativ oder zusätzlich dient zur Benutzereingabe das Scroll-Wheel 47. Der gesondert am Grundkörper 42 angeordnete und auch in der Grösse hervorgehobene Knopf 45 dient ebenfalls zur Benutzereingabe bzw. Steuerung, wobei er vor allem zum Triggern der Positionsbestimmung des Punkts 28 dient. Hat der Benutzer den Stift 40 in für eine Vermessung passender Weise auf dem Punkt 28 abgestellt, löst er mittels des Knopfs einen Befehl an die Steuerung des Vermessungssystems aus, so dass die Positionsbestimmung erfolgt.

Das Messhilfsinstrument 40 bzw. das Vermessungssystem ist optional ausgebildet, den Benutzer bei einer Messaufgabe zu führen, z.B. nächste Handlungsschritte anzuzeigen oder indem eine Systemsteuerung in Abhängigkeit einer fortlaufend ermittelten Position und Orientierung des Stifts 40 und damit des Benutzers diesem über das Display 44 Anweisungen gibt. Als ein weiteres optionales Merkmal weist im Beispiel das Messhilfsinstrument 40 ein Lineal 46 auf, mit dem händisch Längen an der Vermessungsstelle messbar sind. Dieses ist im Beispiel ausklappbar ausgebildet (zeichnerisch durch den Pfeil 46a angedeutet).

Figur 8b zeigt ein Beispiel für ein Vermessen eines Objektpunkts 28 mit Hilfe des Messhilfsstifts 40. Der Stift 40 ist derart ergonomisch ausgebildet, z.B. mittels eines Greifbereichs für zumindest Daumen und Zeigefinger, sowie insbesondere auch Mittelfinger, eines Benutzers, dass er -wie auch ein üblicher Stifteinhändig vom Benutzer 29 verwendbar ist wie dargestellt. Um z.B. einen Punkt eines Objekts 49 in einem Gelände, z.B. im Freien oder im Innern eines Gebäudes, zu vermessen, wird ein Vermessungsgerät 30, z.B. eine Totalstation, bekannt positioniert, so dass das Gerät 30 auf das Messhilfsinstrument 40 ausgerichtet werden kann. Das Vermessungsgerät weist eine um zwei Achsen y, z schwenkbare Kamera 31 auf.

Die auf das Messhilfsinstrument 40 bzw. genauer auf dessen Kugelaufsatz 41 ausgerichtete Kamera nimmt wenigstens ein Bild des Kugelaufsatzes 41 auf, wenn das Messhilfsinstrument 40 den Geländepunkt 28 bezeichnet, im Beispiel also der Benutzer 29 den Stift 40 mit seiner Hand auf den Punkt 28 führt, so dass die Stiftspitze den Objektpunkt 28 berührt. Mittels Bildauswertung des Kamerabilds des Kugelaufsatzes 41 werden Position und Orientierung des Stifts 40 ermittelt. Ausgehend von der bekannten Position und Ausrichtung des Vermessungsgeräts 30 wird mittels Kenntnis der Entfernung bzw. Position des Messhilfsinstruments 40 und dessen Ausrichtung sowie der Länge des Messstifts 40 (bzw. Distanz zwischen einem internen Referenzpunkt des Stifts 40 und Objektpunkt 28) die Position des Punkts 28 ermittelt.

Hierbei ist optional die Spitze 43 als Taster ausgebildet, welcher bei Kontakt oder Berührung des Geländepunkts 28 automatisch die Positionsbestimmung bzw. die Aufnahme eines Kamerabilds des Kugelaufsatzes 41 auslöst, wobei beispielsweise mittels einer Bluetooth-Verbindung ein entsprechender Befehl vom Messhilfsinstruments 40 an eine Steuerung des Vermessungsgeräts 30 ausgegeben wird.

Alternativ oder zusätzlich löst derTaster automatisch bei Berührung eine Messung aus. Als weitere Option erfolgt ein automatisches Auslösen einer Messung oder eines Arbeitsvorgangs, sobald der Stift 40 eine Soll-Lage eingenommen hat.

Statt eines solchen Vermessens wird alternativ eine gewünschte Position auf dem Objekt 49 mittels des Stifts markiert, beispielsweise indem die Stiftspitze als Stiftmarkierer ausgebildet ist, z.B. in Art eines Filzstifts oder Kreide. Somit kann der Messstift 40 auch zum Abstecken von Punkten dienen.

Die handliche Ausbildung des Messhilfsinstruments 40 in Art eines Stifts, welcher leicht mit einer Hand benutzbar ist (wozu z.B. auch der Schwerpunkt des Stifts 40 so gelegt ist, dass zumindest weitgehend ermüdungsfreies und sicheres Handhaben mit einer Hand ermöglicht ist), bietet den Vorteil einer viel weniger mühsamen Handhabung als herkömmliche gattungsgemässe Messhilfsinstrumente. Zudem sind damit auch Geländepunkte markierbar, welche z.B. mit Lotstäben des Stands der Technik nicht erreichbar sind, entweder weil der Lotstab nicht wie erforderlich senkrecht auf dem Punkt positionierbar ist oder der Lotstab zu lang ist. Mit dem vorliegenden Messhilfsstift 40 hingegen kann aufgrund der Ermittlung aller seiner sechs Freiheitsgrade in jeglicher Ausrichtung kontaktiert werden und aufgrund seinem handlichen, vergleichsweise geringen Ausmass sind auch versteckt liegende Punkte vermessbar/absteckbar. Somit sind auch Vermessungen im Nahfeld oder an engen Stellen wie Ecken, Kästen, Wandrücksprüngen, Erkern, in Möbeln etc. ermöglicht.

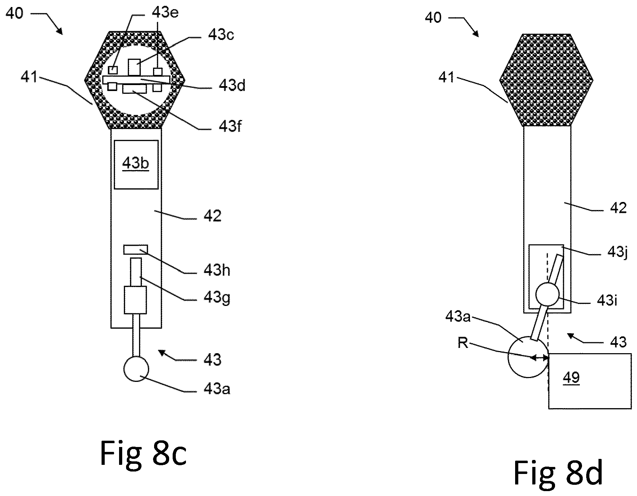

Figur 8c zeigt im Querschnitt ein weiteres Ausführungsbeispiel eines Messstifts 40. Der Stift 40 weist an seinem oberen Ende einen Körper 41 auf, im Beispiel ausgeführt als Polyeder. Der Körper 41 ist Träger eines Codes, welcher wie vorangehend beschrieben bildbasierte Lagebestimmung des Stifts 40 mittels einer externen Kamera ermöglicht. Im Innern des Körpers 41 befindet sich eine Leiterplatte 43d, welche im Beispiel Träger einer intertialen Messeinheit (IMU) 43f ist. Die IMU 43f dient zur Unterstützung der Lagebestimmung, z.B. um die Lagebestimmung robuster zu machen oder tote Winkel zu überbrücken, in denen Lagebestimmung anhand des optischen Codes z.B. aufgrund Unterbrechung der Sichtlinie zur Kamera nicht möglich ist. Weiter trägt die Platine 43d ein Kommunikationsmodul, z.B. in Form eines IRDA-Moduls. Zudem befinden sich im Innern vier Leuchtmittel (LEDs) 43e (zwei oben und zwei unten auf der Platte 43d), wodurch der Körper 41 als Leuchtkörper ausgebildet ist. Die Beleuchtung ist beispielsweise variierbar, z.B. um mittels unterschiedlicher Farben den jeweils vorliegenden Betriebszustand des Stifts 40 anzuzeigen.

Neben einer Batterie 43b weist der Stift 40 an seinem unteren Ende 43 eine Tastkugel 43a auf. Im Beispiel ist die Kugel seitlich auslenkbar, so dass ein seitliches Antasten von Objekten ermöglicht ist. Bei Vorliegen einer solchen Tastkugel 43a ist der Stift 40 optional zusätzlich mit elektronischer und/oder mechanischer Korrektur der Kugelausdehnung versehen, so dass die Grösse der Kugel bei Ermittlung des Punkts 28 automatisch korrigierend berücksichtigt wird. Im Beispiel wird die Auslenkung der Tastkugel 43a mittels an die Tastkugel 43a gekoppelte Magneten 43g gemessen, welche von einem Hall-Element 43h erfasst werden. Alternativ dient ein Piezoelement zur Auslenkungsbestimmung.

Figur 8d zeigt eine weitere Ausführungsform eines Stifts 40 mit Tastkugel 43a. Die Tastkugel 43a ist über ein Kugelgelenkt 43i in einer Aufnahme 44j im unteren Ende 43 des Stifts 40 derart angeordnet, dass bei einer Messung eines Punktes eines Objekts 49 die Kugel 43a genau um den Radius R der Kugel ausgelenkt wird. Somit erfolgt also eine Korrektur der Ausdehnung R der Kugel 43a, indem genau dann eine Messwertaufnahme eines Objektpunktes erfolgt, wenn die Auslenkung aufgrund der Abtastung des Objekts 49 dem Kugelradius R entspricht. Dies wird durch die mechanische Anordnung der Tastkugel 43a sichergestellt.

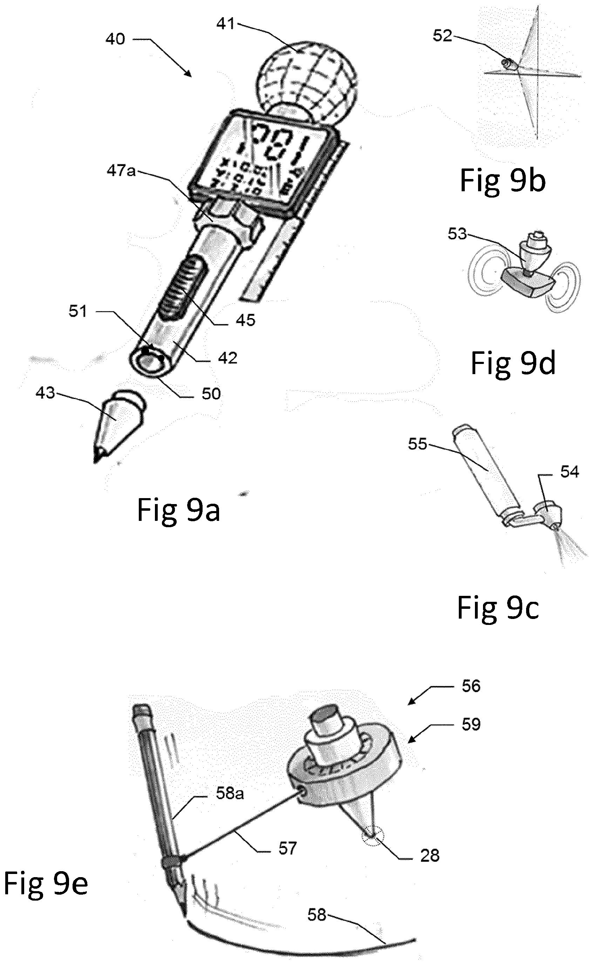

Figur 9a zeigt eine weitere Ausführungsform eines stiftartigen Messhilfsinstruments 40. Im Beispiel weist das Messhilfsinstrument 40 eine auswechselbare Spitze 43 auf. Diese kann mittels einer Halterung 50 am Grundkörper 42 des Stifts 40 montiert und wieder abgenommen werden. Damit sind vorteilhaft verschiedenartige Enden bzw. Spitzen 43 verwendbar, so dass der Funktionsumfang des Messhilfsinstruments 40 im Vergleich zu einer fixen Spitze erweiterbar ist. Z.B. kann eine reine Markierspitze wie z.B. eine Filzstiftspitze gegen eine Sensorspitze ausgetauscht werden oder eine Werkzeugspitze montiert werden. Natürlich sind als Option auch Ausführungsformen mit mehr als einer Spitze bzw. mehr als einem Werkzeug oder Sensor möglich, welche austauschbar sein können oder fest montiert.

Die Figuren 9b-9d zeigen drei Beispiele für mögliche Spitzenmodelle. Figur 9b zeigt eine Spitze, welche als Linienlaser 52 ausgebildet ist. Somit lassen sich mittels des Stifts 40 Laserlinien z.B. auf einer Gebäudewand im Rahmen von Bauarbeiten anzeigen.

Figur 9c zeigt ein weiteres Beispiel für eine Werkzeugspitze. Diese ist im Beispiel als Sprühspitze 54 ausgebildet, so dass mittels des Stifts 40 Farbe aus einem Tank 55 z.B. an eine Gebäudewand anbringbar ist, z.B. um Layoutgeometrien zu markieren.

Figur 9d zeigt als Beispiel für eine Sensorspitze einen Metalldetektor 53, so dass mit dem Messhilfsinstrument 40 Metalle detektieren lassen.

Der in Figur 9a gezeigte Knopf 45 ist im Falle einer aktiven Spitze wie z.B. einer der Spitzen 52, 53 oder 54 optional vorgesehen, um die jeweilige Funktion der Spitze auszulösen. Beispielsweise wird also durch Betätigen des Knopfs 45 ein Sprühvorgang mit der Sprühspitze 54 ausgelöst oder der Metalldetektor 53 aktiviert.

Als weitere, in Figur 9a dargestellte Option weist die Halterung 50 ein Mittel 51 auf, mit dem die jeweils angebrachte Spitze automatisch identifizierbar ist. Beispielsweise handelt es sich um elektrische Kontakte 51 wie dargestellt, die ein entsprechendes Gegenstück auf der Spitze 43 haben, welches die jeweilige Spitze 43 kennzeichnet, z.B. ein ID-Chip. Als weiteres Beispiel erfolgt die Identifizierung optisch mittels, indem z.B. über eine Optik 51 eine optische Codierung, wie z.B. ein Barcode, welche auf der jeweiligen Spitze im Halterungsbereich angebracht ist, gelesen werden kann. Im Rahmen der Identifizierung erfolgt ein Übermitteln der Grösse/Länge der Spitze, so dass die tatsächliche Stiftlänge automatisch beim Ermitteln der Messergebnisse berücksichtigt wird.

Als weitere, nicht dargestellte Option, ist die Halterung 50 vorgesehen, um Verlängerungsstücke aufnehmen zu können. Es sind also zwischen Grundkörper 42 und Spitze 43 Verlängerungsteile auswechselbar montierbar, so dass die Länge des Stifts 40 variierbar ist. Somit kann z.B. die Länge des Stifts 40 an unterschiedliche Messaufgaben angepasst werden, z.B. erhöht werden, um Punkte in einer relativ tiefen Vertiefung zu erreichen. Alternativ zu solchen montierbaren Verlängerungsstücken ist die Länge des Instruments 40 bzw. dessen Körpers 42 varrierbar ausgestaltet, indem der Grundkörper 42 als Art Teleskopstab ausgebildet ist. Die Spitze 43 ist somit dann, besonders vorteilhaft stufenlos, ein- und ausfahrbar. Dies kann beispielsweise durch den Benutzer erfolgen, indem er das Rad 47a dreht.

Figur 9e zeigt ein weiteres Beispiel für eine Spitze. Diese Spitze 56 weist ein Massband 57 auf, welches in einem an der Spitze 56 angebrachten Aufnahmebehälter 59 aufwickelbar befestigt ist. Der Aufnahmebehälter 59 ist entweder fix an der Spitze 56 angebracht oder -insbesondere im Fall einer nicht austauschbaren Stiftspitze- abnehmbar an der Spitze 56 montiert. Die Länge des Massbands 57 ist also variabel, wobei der Behälter 59 einen Arretiermechanismus aufweist (nicht dargestellt), mit welchem sich eine gewählte Länge des Massbands 57 feststellbar ist. Das Massband 57 dient z.B. dazu, Strecken von einem mit der Spitze kontaktierten Punkt 28 zu einem dazu benachbarten Punkt manuell aus- oder anzumessen. Alternativ oder zusätzlich weist das Ende des Massbands 57 wie dargestellt ein Markiermittel bzw. eine Halterung für ein solches auf, so dass z.B. wie dargestellt ein Bleistift 58a mit dem Massband 57 und damit der Spitze 56 verbunden werden kann. Ist das Massband 57 arretiert, lässt sich so z.B. vom Benutzer ein Kreis oder Kreisbogen 58, beispielsweise auf einer Gebäudewand, zeichnen, wobei dann der Kreismittelpunkt auf der Längsachse 48 liegt (s. Figur 4a). Ein solches Kreisanzeichnen dient z.B. um einen Kreisbereich zu markieren, in dem eine bestimmte handwerkliche Bautätigkeit erfolgen soll.

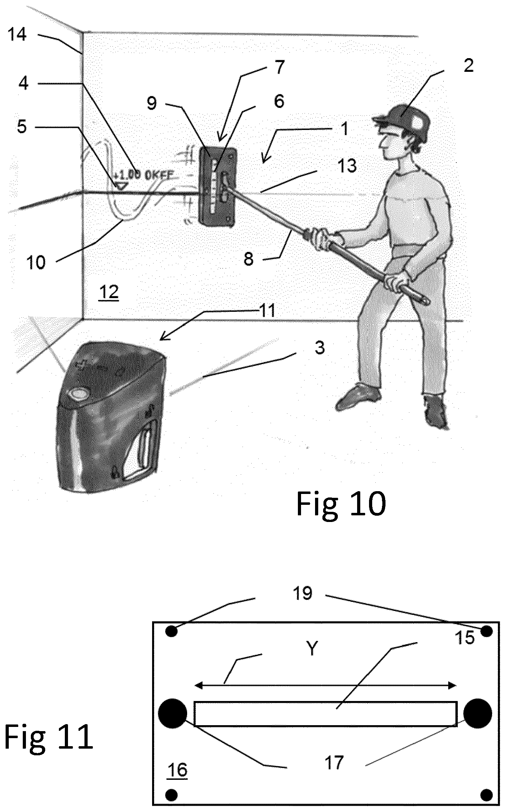

Figur 10 zeigt ein erstes Beispiel für einen Laserreceiver 1, welcher ausgebildet ist zum Anbringen einer physischen, dauerhaften Markierung 5 auf einer Gebäudefläche 12. Der Laserreceiver 1 weist ein Gehäuse 7 mit einer Frontfläche 9 auf und einer Rückfläche (nicht dargestellt). Die Frontfläche 9 weist einen Zeilendetektor 6 auf, mit dem Laserlicht 3 erfassbar ist. Das Laserlicht 3 wird von einem Baulaser 11, z.B. einem Rotationslaser emittiert und stellt in bekannter Art und Weise eine Positionsreferenz dar, z.B. in Form einer Referenzebene 13 wie dargestellt. Aus dem Auftreffpunkt des Laserlichts 3 auf dem Detektor 6 wird mittels einer Steuerung des Laserreceivers 1 (nicht dargestellt) auf eine Position des Receivers 1 relativ zur Positionsreferenz geschlossen. Im Beispiel ist somit die vertikale Position des Receivers 1 ermittelbar (zumindest soweit sich der Detektor 6 im Rahmen des Referenzlichts 13 bewegt). Alternativ zur Darstellung ist der Detektor flächenhaft ausgebildet, so dass zusätzlich auf eine Orientierung (Drehung) des Receivers um die zur Gebäudefläche 12 senkrechte Achse geschlossen werden kann.

Der Laserreceiver 1 weist weiterhin einen handhaltbaren Fortsatz 8 in Form eines Stiels auf. Zudem ist die Rückfläche des Gehäuses 7 ist dergestalt eben ausgebildet, dass ein Benutzer 2 durch manuelles Greifen am Stiel 8 das Gehäuse 7 bzw. den Laserreceiver 1 entlang der Gebäudefläche 12 verschieben kann, wobei der Receiver 1 dem Verlauf der Gebäudefläche 12 strikt folgt. Anders formuliert, ist der Receiver 1 derart ausgebildet, dass der manuell eng anliegend an der Gebäudefläche 12 grossräumig führbar ist. Alternativ zur dargestellten Ausführungsform ist das Gehäuse 7 selbst handhaltbar ausgeformt, z.B. durch entsprechende ergonomische Ausbuchtungen, und weist keinen Stiel auf. Eine derartige weniger sperrige Ausführungsform ist besonders für kleinräumigere Markierungsaufgaben vorteilhaft wohingegen die dargestellte Ausführungsform mit Stiel 8 besondere Vorteile für grossflächigere Anwendungen bietet.

Der Laserreceiver 1 weist weiter einen Markierer auf (nicht dargestellt), welche z.B. als Tintenstrahldrucker oder Laserbeschrifter ausgebildet ist, so dass im an die Gebäudefläche 12 angelegten Zustand auf diese druckbar bzw. einbrennbar ist. Im Falle eines Druckers handelt es sich entweder um einen Einfarbendrucker oder Mehrfarbdrucker, wobei auch Spezialtinten oder -mittel wie z.B. fluoreszierende Farbe oder Klarlack zur Konservierung/Versiegelung einer aufgebrachten Markierung optional verwendbar sind. Vorteilhafterweise ist der Drucker ausgebildet, um auch an Decken, also entgegen der Schwerkraft drucken zu können. Der Markierer kann alternativ zur mechanischen Markierung ausgebildet sein, z.B. als Körner.

Ausserdem weist der Laserreceiver 1 einen Speicher auf (nicht dargestellt), in welchem eine geplante Position, z.B. als Teil eines Gebäudeplans, abrufbar abgelegt ist. Eine solche geplante Position ist z.B. eine Stelle an der Gebäudefläche 12, an der ein Loch gebohrt werden soll oder eine sonstige Installationsmassnahme erfolgen soll. Bei dem Speicher kann es sich auch um einen flüchtigen Speicher zur nur kurzzeitigen Bereitstellung der Positionsdaten handeln. Dann erfolgt z.B. eine kabellose Datenübertragung (per WiFi oder Bluetooth etc.) der Positionsdaten in Echtzeit von einem externen Gerät (auf der Baustelle oder ausgelagert z.B. in einer Cloud), wo die Positionsdaten in einem Permanentspeicher abgelegt sind. Eine Datenübertragung von einem externen Gerät wird optional z.B. auch verwendet, um weitere Informationen oder Steuerbefehle an den Drucker auszugeben, z.B. hinsichtlich der Auswahl der zu verwendenden Druckfarbe.

Diese geplante Position wird nun mit Hilfe des Laserreceivers 1 positionsgenau physisch und dauerhaft auf der Gebäudefläche 12 markiert (im Unterschied z.B. zu einer Markierung mittels Licht, welche nicht physischer Art ist und mit Entfernen des Lichtgebers aufhört (wobei "dauerhaft" auch einschliesst, dass die Markierung 5 nach einer gewissen Zeitdauer verschwindet, z.B. indem diese mit einer UV-empfindlichen Farbe aufgetragen ist, die definiert mit der Zeit verblasst). Hierzu ist die Steuerung des Laserreceivers 1 derart ausgebildet, dass es ausreicht, den Receiver 1 bzw. das Gehäuse 7 oder den Markierer nur ungefähr über die geplante Stelle zu führen. Der Benutzer 1 verschiebt also den Receiver 1 mittels des Stiels 8 über die Gebäudefläche 12, ohne wissen zu müssen, wo genau auf der Fläche 12 eine Markierung angebracht werden soll. Dies Aufgabe übernimmt die Steuerung, welche die geplante Position abruft und fortwährend die aufgrund der Positionsreferenz gegebene Position des Laserreceiver 1 mit der geplanten Position abgleicht, um bei Erreichen bzw. Überstreichen der geplanten Position einen Befehl an den Markierer zu geben, eine Markierung 5 an der geplanten Position zu drucken.

Mit anderen Worten überstreicht der Benutzer 2 einen gewissen Flächenbereich mit einer zufälligen oder zumindest nicht exakt zielgerichteten Bewegung 10, innerhalb dessen sich irgendwo die geplante Stelle befindet und sobald die geplante Stelle im Rahmen der Bewegung 10 "zufällig" überfahren wird bzw. sobald sich die geplante Stelle innerhalb einer Markierzone oder Druckbereichs des Laserreceivers 1 befindet (also für den Markierer "erreichbar" ist), löst die Steuerung, basierend auf der durch den Laserstrahl gegebenen Positionsreferenz, den Markierungsvorgang aus. Im vorliegenden Beispiel ist es zweckmässig, einen sichtbaren Laserstrahl 3 zu verwenden, so dass der Benutzer 2 lediglich den Receiver 1 entlang der an der Gebäudefläche 12 sichtbaren Laserlinie 13 verschieben muss.

Im Beispiel ist der Laserreceiver 1 zudem ausgebildet, zusätzlich zur (Positions- )Markierung 5 weitere Informationen auf die Gebäudefläche 12 zu drucken, z.B. einen die Markierung 5 beschreibenden Text 4 und/oder zusätzliche Grafiken, so dass beispielsweise auf die Markierung 5 bezogene Arbeitsanweisungen direkt an der Montagestelle verfügbar sind.

Da in der Regel durch das Licht 3 z. B. nur eine horizontale Positionsreferenz gegeben ist, für eine positionsgenaue Markierung jedoch zumindest auch eine Positionsinformation in vertikaler Richtung vorhanden sein muss, wird z.B. eine zweite Referenzebene in vertikaler Richtung durch ein zweites Referenzlicht aufgespannt, so dass basierend auf dem Kreuzungspunkt der beiden Referenzebenen die geplante Position markierbar ist. Alternativ oder zusätzlich weist der Laserreceiver 1 einen oder mehrere Positionsgeber auf (siehe nachfolgende Figuren), mit dem oder denen weitere Freiheitsgrade bestimmbar sind, so dass die automatische positionsgenaue Markierung ermöglicht ist.

Figur 11 zeigt ein Beispiel für einen Laserreceiver bzw. Baustellendrucker, welcher einen Positionsgeber aufweist. Dargestellt ist die Rückfläche 16 des Gehäuses, aufweisend einen linienförmigen Druckbereich 15 und zwei Positionsgeber 17.

Die Druckzeile 15, z.B. eine Tintenstrahl-Düsenreihe, ermöglicht ein flächenhaftes Drucken. Zudem steht im Gegensatz zu einem punktuellen Druckbereich eine grössere Druckbreite Y zur Verfügung, so dass z.B. zum Anbringen einer punktförmigen Markierung es ausreicht, die geplante Stelle irgendwo auf der Breite Y zu überstreichen, um diese markieren zu können. D.h. die "Toleranz" der zumindest teilweise ungerichteten bzw. ungezielten manuellen Verschiebung ist erhöht. In praktischer Hinsicht wird eine Abwägung zwischen einem möglichst grossen Druckbereich und der Handhabbarkeit und/oder Fertigungskosten des Druckers erfolgen.

Die Positionsgeber 17 sind im Beispiel als optische oder mechanische Weggeber ausgebildet (wie sie z.B. aus Computermäusen bekannt sind), wodurch eine zurückgelegte relative Verschiebung des Laserreceivers (und ggf. auch das Ausmass einer Rotationsbewegung) entlang der Gebäudefläche messbar ist. Mittels einer solchen Wegmessung nach Art des dead reckoning kann z.B. die horizontale Position des Druckers bzw. Laserreceivers, ausgehend von einem bekannten Ort, kontinuierlich bestimmt werden. Beispielsweise dient als ein solcher definierter Startpunkt in horizontaler Richtung die Gebäudekante 14 (s. Figur 10), so dass der Benutzer 2 den Receiver 1 an dieser Kante 14 anlegt und von dort aus die Wand 12 in der Ebene 13 überstreicht.

Im Beispiel weist die Rückfläche zudem an den Ecken vier Antastelemente bzw. Führungselemente 19 auf, ausgebildet als Rollen oder Kugeln. Damit ist ein präzises Verschieben des Gehäuses dem Verlauf einer Gebäudefläche folgend vereinfacht. Alternativ oder zusätzlich zu den Rollen oder Kugeln 19 weist das Gehäuse hierzu Walzen auf.

Da mit solch einem Positionsgeber 17 auch ein vertikaler Weg messbar ist, werden optional die Positionsdaten des Positionsgebers 17 verwendet, um dir Robustheit der Positionsreferenzierung mittels des Positionsreferenzlaserlichts zu erhöhen. Beispielsweise werden damit Bereiche überbrückt, innerhalb derer eine Positionsreferenzierung anhand des Laserlichts nicht möglich ist, z.B. da der Laserstrahl wegen eines Hindernisses nicht überall die betroffene Gebäudefläche erreicht. Abgeschattete Stellen sind also dann dennoch positionsgenau markierbar.

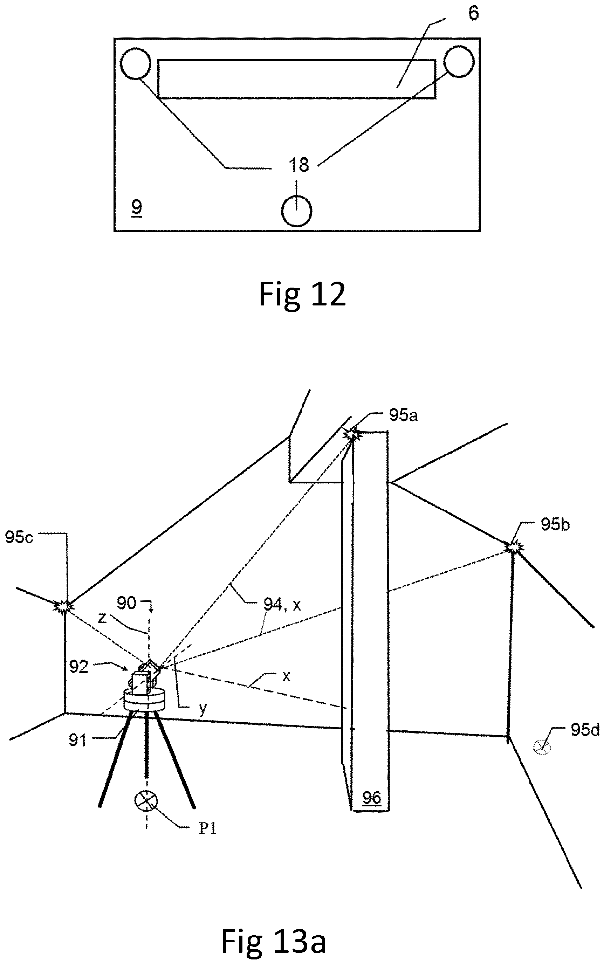

Figur 12 zeigt eine alternative Ausbildungsform eines Positionsgebers. Dargestellt ist die Vorderseite 6 des Receiver- bzw. Druckergehäuses. Die Vorderseite weist neben der Laserdetektorzeile 6 drei Leuchtmittel 18 auf, z.B. ausgebildet als LEDs, die definiert auf der Vorderseite angeordnet sind. Diese LEDs werden als Lichtpunkte von einer externen Kamera aufgenommen, wie sie z.B. Vermessungsgeräte des Stands der Technik aufweisen. Da die Anordnung der LEDs dem Vermessungsgerät bekannt ist, kann aus dem Bild der LEDs in an sich bekannter Weise auf die räumliche Orientierung des Gehäuses geschlossen werden. Als Option ist der Positionsgeber derart ausgebildet, dass auf eine Positionsreferenzierung mittels Laserlicht bzw. das Vorhandensein eines Laserdetektors verzichtet werden kann, d.h. in einer zur Darstellung alternativen Ausführungsform werden alle notwendigen Positions- und/oder Orientierungsinformationen durchgängig vom Positionsgeber ermittelt und bereitgestellt.

Im beispielhaften Falle, dass der Receiver strikt auf der Gebäudefläche geführt wird, was für das Markieren einer waagrechten Fläche z.B. auch durch eine Kardanaufhängung sichergestellt werden kann, (d.h. es wird mechanisch sichergestellt, dass der Drucker durchgängig lotrecht ausgerichtet ist), ist die Bewegung damit auf die Flächenebene eingeschränkt, d.h. sie ist bis auf zwei translatorische und eine rotatorische Variable vorbekannt bzw. vorbestimmt. Somit ist in einem solchen Fall ein Positionsgeber ausreichend, der die Bewegung bez. dieser drei Freiheitsgrade bestimmt bzw. bei Positionsreferenzierung in vertikaler Richtung anhand des detektierten Laserlichts auch nur bez. eines translatorischen (horizontalen) Freiheitsgrads und eines rotatorischen Freiheitsgrad (Drehung des Gehäuses in der Flächenebenen). Die Ebenen-/Flächennormale lässt sich dabei z.B. über die Trajektorie der Druckerbewegung an der Fläche bestimmen. Beispielsweise weist dann der Positionsgeber einen Neigungssensor und einen Gierwinkelsensor auf.

Liegt eine solche Beschränkung oder partielle Vorbestimmheit der Bewegung nicht vor, da der Baustellendrucker nicht (eng) entlang an der Gebäudefläche an dieser vorüber bewegt wird, so sind die oder der Positionsgeber vorzugsweise zur 6-DoF-Bestimmung ausgelegt. Beispielsweise sind also die Leuchtmittel 18 derart in Anzahl und Anordnung ausgewählt, dass damit (mittels eines externen Messgeräts) Lage und Orientierung des Receivers oder Druckers in Bezug auf alle sechs Freiheitsgrade bestimmbar ist. Auch hierbei wird als alternative Option auf eine Positionsreferenzierung mittels Laserlicht bzw. das Vorhandensein eines Laserdetektors verzichtet.

Alternativ zu einem handgeführten Markierer verfügt dieser über einen Antrieb und ist als autonomes oder semi-autonomes Fahrzeug (bodengestützt, UGV oder luftgestützt, UAV) ausgebildet. In derartigen Ausführungsformen ist eine 6-DoF-Bestimmung besonders vorteilhaft, damit auf eine strikte Führung des Geräts entlang der Gebäudefläche verzichtet werden kann, sondern z.B. auch der Abstand zur Fläche oder die Ausrichtung um alle drei Rotationsachsen - zumindest innerhalb gewisser Grenzen- variabel sein kann.

Die Figuren 13a-13c illustrieren ein Verfahren zum Markieren von Punkten auf einem Objekt anhand geplanter Positionen zu Bautätigkeitszwecken. Dargestellt ist ein stationäres Vermessungsgerät 90, welches eine Basis 91 und eine auf der Basis 91 angeordnete Anzieleinheit 92 aufweist. Die Anzieleinheit 92 ist gegenüber der Basis 91 um zwei Achsen z und y drehbar und ist ausgebildet zur Emission eines Laserstrahls als Freistrahls 94 in eine Zielrichtung x auf das Objekt, welches im Beispiel ein Innenraum ist. Die jeweils vorliegende Zielrichtung wird z.B. mit zwei Winkelmessern für die jeweilige Achse z, y gemessen. Die Mess- und Markiervorrichtung 90 dient zur messtechnischen Erfassung und zur Markierung von Punkten 95a-95d im dreidimensionalen Raum. Mit der Mess- und Markiervorrichtung können distanzierte Linien, insbesondere Strecken, Flächen und durch mehrere Flächen gebildet vermessen werden.

Objektpunkte bzw. deren zugehörige Positionen können in Polarkoordinaten aus dem für die beiden Raumwinkel von den Achsen z und y gelieferten Messwerten und der von einem Laserdistanzmesser des Vermessungsgeräts 90 gemeldeten Entfernung in einer Steuerung des Geräts 90 mit Einzelpunktauswertefunktionalität ermittelt und zumindest zeitweise gespeichert werden. Aus zwei Raumpunkten 95a, 95b können in bekannter Weise eine Strecke und aus drei Raumpunkten 95a, 95b, 95c eine Fläche berechnet werden. Auf diese Weise kann ein aus mehreren Flächen oder Wänden gebildeter Raum aufgenommen, vermessen und als Raummodell gespeichert werden.

Mit Vermessungsgerät 90 können auf umgekehrtem Weg Markierpunkte mit beliebiger Wiederholgenauigkeit im Rahmen der Messauflösung auf eine Fläche, z.B. einer der dargestellten Wände, projiziert werden. Der optisch sichtbare Laserstrahl 94 erzeugt beim Auftreffen auf die Fläche einen sichtbaren Leuchtpunkt. An dieser Stelle kann dann von Hand oder mittels eines oben dargestellten selbstmarkierenden Laserreceivers bzw. Baustellendruckers eine bleibende Markierung angebracht werden.

Die Position bzw. die Koordinaten der erforderlichen Markierpunkte sind in einem Gerätespeicher hinterlegt bzw. werden von der Steuerung berechnet. Hierfür werden z.B. von Hand oder mittels einer Schnittstelle die erforderlichen Positionsdaten eingegeben oder aufgenommen. Diese Daten können z. B. abzutragende Entfernungen oder Winkel von bestimmten Bezugslinien oder - punkten der Fläche oder des Raumes sein. Zum Anfahren einer hinterlegten bzw. berechneten Position bzw. zu markierenden Objektpunktes wird die Anzielrichtung x manuell oder automatisiert solange verändert, bis die Abweichung zur anhand der Daten errechneten Sollausrichtung gleich Null ist, wobei hierbei ggf. auch die per Messstrahl 94 gemessene Distanz zur Fläche berücksichtigt wird. Die Steuerung ist im Beispiel in der Lage, mit den gemessenen Raumpunkten 95a-95d Berechnungen anzustellen und ein dreidimensionales Abbild des umgebenden Raumes zu erstellen.

Anstelle eines Laserstrahls 94 kann der Markierstrahl auch aus einem anderen optisch sichtbaren Lichtstrahl oder dergleichen bestehen. Es ist auch möglich, den Markierstrahl erst beim Auftreffen auf einen Gegenstand durch Oberflächenreaktionen sichtbar zu machen. Der Messstrahl muss an sich nicht optisch sichtbar sein. Die Entfernung eines Raumpunktes 95a-95d kann vielmehr auf beliebige Weise gemessen werden, wobei der Raumpunkt 95a-95d sich über eine zusätzliche optische Einrichtung anvisieren lässt.

Die zu Bautätigkeitszwecken zu markierenden Objektpunkte 95a-95d sind z.B. eine Reihe von Bohrlöchern in den Wänden, der Decke oder dem Boden. Diese Bohrlöcher stellen also die gewünschten Markierpunkte 95a-95d dar. Die (Soll-)Positionen der gewünschten Bohrlöcher sind im Speicher des Vermessungsgeräts 90 abrufbar hinterlegt. Die tatsächlichen Masse des Raums, die zur Bestellung des Systems benötigt sind, werden beispielsweise durch Vermessung mit dem Vermessungsgerät 90 selbst im Zuge bzw. in unmittelbarer Vorbereitung der Markiertätigkeit bereitgestellt, können aber alternativ auch anhand eines digitalen Gebäudeplans oder Gebäudemodells und/oder einer zeitlich länger zurückliegenden, vorherigen Vermessung bereitgestellt werden.

Zu diesem Zweck wird das Vermessungsgerät 90 möglichst so inmitten des zu vermessenden Raumes positioniert, dass mit dem Laserstrahl 94 alle auszumessenden bzw. markierenden Punkte erreichbar sind. Auch muss an sich während des ganzen Mess- und Markiervorganges gewährleistet sein, dass die Mess- und Markiervorrichtung 90 ihre Positionierung P1 im Raum, d. h. den Bezugsort P1, nicht ändert.

Diese ideale Situation ist jedoch nicht immer gegeben bzw. herstellbar, z.B. weil von einer einzigen Positionierung aus nicht alle erforderlichen Mess- bzw.

Markierpunkte anzielbar sind, wobei die Positionierung vom Benutzer ungünstig gewählt sein kann oder je nach Messumgebung überhaupt keine Positionierung auffindbar ist, die diese Bedingungen erfüllt. Beispielsweise ist wie in Figur 13a dargestellt von der ersten Positionierung P1 aus der Punkt 95d nicht vermessbar oder markierbar, da das Hindernis, die Säule 96 in Zielrichtung x steht und somit den Messstrahl 94 abdeckt.

Deshalb wird nun, nachdem die von der ersten Positionierung P1 aus erreichbaren Punkte 95a-95c vermessen oder markiert sind, ermittelt, ob und welche Objektpunkte noch nicht vermessen bzw. markiert sind. Im Beispiel wird also z.B. festgestellt, dass der Punkt 95d noch nicht markiert ist bzw. von der ersten Positionierung P1 aus nicht markierbar ist (s. Figur 13a). Es ist ein Versetzen des Vermessungsgeräts 90 notwendig, um den fehlenden Objektpunkt 95d markieren zu können. In Vorbereitung hierzu wird in der ersten Positionierung P1 mit einer Kamera des Vemessungsgeräts 90 ein erstes Umgebungsabbild erstellt, also ein Kamerabild zumindest eines Teils des Raums aufgenommen. Alternativ kann ein solches Umgebungsabbild z.B. auch mittels eines Laserscans erstellt werden.

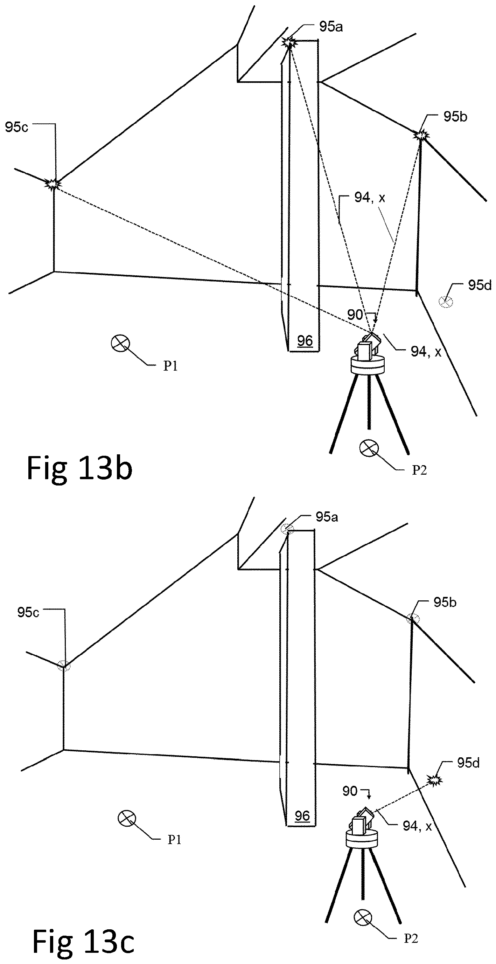

Nun wird das Vermessungsgerät 90 von der ersten Positionierung P1 zu einer zweiten Positionierung P2 umgestellt (s. Figur 13b). Um nun trotz geändertem Bezugsort und ohne aufwändiges aus dem Stand der Technik bekanntes manuelles Positionsreferenzieren durchführen zu müssen, wird von der zweiten Positionierung P2 aus automatisch ein weiteres Umgebungsabbild erstellt, also z.B. ein zweites Kamerabild aufgenommen. In diesem zweiten Kamerabild werden anhand des ersten Kamerabilds durch an sich bekannte Bildauswertungsmethoden von der Steuerung automatisch die bereits erfassten Punkte 95a-95c erkannt. Da deren Positionen bekannt und im Speicher hinterlegt sind, kann daraus durch ein automatisches Vermessen von der zweiten Positionierung P2 aus, wie in Figur 13b angedeutet, auf die Koordinaten der zweiten Positionierung P2 geschlossen werden. Die zweite Positionierung wird somit basierend auf der bekannten ersten Positionierung P1 positionsbestimmt.

Aus der nun bekannten Positionierung P2 wird dann, wie in Figur 13c dargestellt, der noch fehlende und von der zweiten Positionierung P2 aus anzielbare Gebäudepunkt 95d markiert. Durch das automatische Selbstbestimmen der neuen Positionierung P2 durch das Vermessungsgerät 90 wird also vorteilhaft ein einfaches Verfahren ermöglicht, mit dem sich verdeckte Objektpunkte vermessen bzw. markieren lassen. Alternativ oder zusätzlich zum oben genannten Bestimmen der zweiten Positionierung P2 anhand eines Abgleichs mit dem ersten, aus der ersten Positionierung aufgenommenen Kamerabild erfolgt zur Bestimmung der zweiten Positionierung P2 ein Abgleich des zweiten Umgebungsabbilds mit einem hinterlegten digitalen Gebäude- oder Raumplan, welcher z.B. wie oben erwähnt mittels Messungen von der ersten Positionierung P1 aus erstellt worden ist. Alternativ oder zusätzlich erfolgt ein Bestimmen der zweiten Positionierung mittels an sich bekannter Structure-from-motion Algorithmen, basierend auf Daten einer IMU und/oder Kameradaten.

Optional wird als Anleitung für den Benutzer von der Steuerung des Vermessungsgeräts 90 vor dem Versetzen des Vermessungsgeräts 90 ein Vorschlag für die zweite Positionierung P2 auf einem Display ausgegeben. Die Steuerung bestimmt also z.B. anhand der bekannten Positionierung P1 bzw. anhand eines Gebäude- oder Raumplans und der hinterlegten Position des noch fehlenden Objektpunkts 95d bzw. der auf ihn bezogenen Zielrichtung x, welche Positionierung oder welcher Positionierungsbereich im Raum für ein Vermessen oder Markieren des oder der fehlenden Objektpunkte in Frage kommt bzw. optimal geeignet ist, z.B. hinsichtlich der Entfernung zu einem Objektpunkt oder mehreren/allen fehlenden Objektpunkten.

Als optimal geeignet wird z.B. ein Standort angesehen, von dem der Auftreffwinkel des Laserstrahls 94 auf zu vermessenden oder zu markierenden Stellen mit möglichst wenig verzerrtem Querschnitt auftrifft. Flache Strahlauftreffwinkel sind ungünstig, weswegen Positionierungen, die zu solch flachem Auftreffen führen würden, ausgeschlossen werden und stattdessen eine oder mehrere Positionierungen ermittelt werden, welche für einen oder mehrere noch zu vermessende oder zu markierende Objektpunkte ein möglichst senkrechtes Auftreffen des Laserstrahls 94 ermöglichen.

Diese Anleitung bzw. dieser Positionierungsvorschlag wird vorzugsweise in grafischer Form dem Benutzer auf einem Gerätedisplay angezeigt, beispielsweise eingebettet in eine 2D- oder 3D-Darstellung des Raums oder eines Gebäude- oder Raumplans.

Es versteht sich, dass diese dargestellten Figuren nur mögliche Ausführungsbeispiele schematisch darstellen.

## Patentansprüche

1. Verfahren zum Vermessen und/oder optischen Markieren von Punkten (95a-d) auf einem Objekt anhand geplanter Positionen zu Bautätigkeitszwecken mit den Schritten
• Aufstellen eines stationären Vermessungsgeräts (90) an einer ersten bekannten Positionierung in einer Umgebung des Objekts, wobei das Vermessungsgerät aufweist
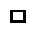 eine Basis (91),
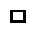 eine eine Zielrichtung (x) definierende und gegenüber der Basis um wenigstens eine Achse (y, z), insbesondere zwei zueinander orthogonale Achsen, schwenkbare Anzieleinheit (92), insbesondere ein Zielfernrohr,
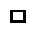 eine Strahlquelle, insbesondere Laserquelle, zur Strahlungserzeugung sowie eine Optik zur Emission der Strahlung als Freistrahl (94) in Zielrichtung, wobei der Freistrahl (94) zum Vermessen und/oder Markieren von Objektpunkten (95a-d) dient,
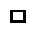 wenigstens einen Winkelmesser sowie eine Winkelmessfunktionalität zur Messung der Zielrichtung (x), und
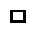 eine Steuerung mit Einzelpunktbestimmungsfunktionalität,
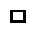 einen Speicher, in dem eingegebene oder vermessene Positionen hinterlegbar sind, insbesondere als Teil eines Gebäude- oder Raumplans,
• Abrufen einer Menge von zu vermessenden und/oder zu markierenden Objektpunkten (95a-d) des Objekts aus dem Speicher,
• von der ersten Positionierung (P1) aus Vermessen und/oder Markieren von Objektpunkten (95a-c) der Menge von Objektpunkten (95a-d), welche von der ersten Positionierung (P1) aus mittels des Freistrahls (94) vermessbar und/oder markierbar sind, basierend auf der Zielrichtung (x),
• Ermitteln fehlender Objektpunkte (95d) der Menge von Objektpunkten (95a-d),
• Versetzen des Vermessungsgeräts (90) an eine zweite Positionierung (P2) in der Umgebung des Objekts,
• automatisches Bestimmen der zweiten Positionierung (P2) durch das Vermessungsgerät (30) von der zweiten Positionierung (P2) aus basierend auf der Kenntnis der ersten Positionierung (P1), so dass die zweite Positionierung (P2) bekannt ist,
• Vermessen und/oder Markieren mittels des Freistrahls (94) von fehlenden Objektpunkten (95d) von der zweiten Positionierung (P2) aus,
wobei ein für die zweite Positionierung (P2) geeigneter Positionierungsvorschlag vor dem Versetzen zumindest ungefähr von der Steuerung des Vermessungsgeräts (90) berechnet wird,
**dadurch gekennzeichnet, dass**
der Positionierungsvorschlag basierend auf der bekannten ersten Positionierung (P1) und einer hinterlegten Position wenigstens eines der fehlenden Objektpunkte (95d) berechnet wird und einem Benutzer auf einem Display angezeigt wird und die Anzeige des Positionierungsvorschlags in grafischer Form erfolgt,
• eingebettet in eine Visualisierung eines Gebäude- oder Raumplans und/oder
• eingebettet in ein vor Ort aufgenommenes 2D- oder 3D-Panoramabild der Umgebung und/oder
• als augmented reality-Darstellung in einem Live-Videobild der Umgebung.

2. Verfahren nach Anspruch 1,
**dadurch gekennzeichnet, dass**
als Kriterium für das Berechnen des Positionierungsvorschlags ein möglichst senkrechter Messwinkel des Freistrahls (94) bezüglich einer Oberfläche des Objekts bei einem oder mehreren fehlenden Objektpunkten (95d) herangezogen wird.

3. Verfahren nach Anspruch 1 oder 2,
**dadurch gekennzeichnet, dass**
das Berechnen des Positionierungsvorschlags eine Information über eine Zielrichtung (x) zu wenigstens einer der fehlenden Positionen (95d) berücksichtigt.

4. Verfahren nach einem der Ansprüche 1 bis 3,
**dadurch gekennzeichnet, dass**
das automatische Bestimmen der zweiten Positionierung (P2) anhand eines vom Vermessungsgerät (90) in der zweiten Positionierung (P2) erstellten Umgebungsabbilds erfolgt, insbesondere wobei das Umgebungsabbild mittels eines Kamerabilds des Vermessungsgeräts (90) und/oder eines mittels des Freistrahls (94) durchgeführten Laserscans erstellt wird.

5. Verfahren nach Anspruch 4,
**dadurch gekennzeichnet, dass**
im Rahmen des automatischen Bestimmens der zweiten Positionierung (P2) das Umgebungsabbild der zweiten Positionierung
• mit einem in der ersten Positionierung (P1) erstellten Umgebungsabbild verglichen wird, insbesondere wobei in beiden Umgebungsabbildern ersichtliche und von der ersten Positionierung (P1) aus verarbeitete Positionen (95a-c) als Positionsreferenz dienen und/oder
• mit einem hinterlegten digitalen Gebäude- oder Raumplan verglichen wird.

6. Verfahren nach einem der Ansprüche 1 bis 5,
**dadurch gekennzeichnet, dass**
das automatische Bestimmen der zweiten Positionierung (P2) mittels eines structure-from-motion Algorithmus anhand von Messdaten einer inertialen Messeinheit und/oder einer Folge von Kamerabildern erfolgt.

7. Stationäres Vermessungsgerät (90) zum Vermessen und/oder optischen Markieren von Punkten (95a-d) auf einem Objekt anhand geplanter Positionen zu Bautätigkeitszwecken, wobei das Vermessungsgerät aufweist
• eine Basis (91),
• eine Zielrichtung (x) definierende und gegenüber der Basis um wenigstens eine Achse (y, z), insbesondere zwei zueinander orthogonale Achsen, schwenkbare Anzieleinheit (92), insbesondere ein Zielfernrohr,
• eine Strahlquelle, insbesondere Laserquelle, zur Strahlungserzeugung, sowie eine Optik zur Emission der Strahlung als Freistrahl (94) in Zielrichtung (x),
• wenigstens einen Winkelmesser sowie eine Winkelmessfunktionalität zur Messung der Zielrichtung (x), und
• eine Steuerung mit Einzelpunktbestimmungsfunktionalität,
• einen Speicher, in dem eingegebene oder vermessene Positionen hinterlegbar sind, insbesondere als Teil eines Gebäude- oder Raumplans,
**dadurch gekennzeichnet, dass**
die Steuerung ausgebildet ist zur Ausführung des Verfahrens nach einem der Ansprüche 1 bis 6.

8. Computerprogrammprodukt mit Programmcode, der auf einem maschinenlesbaren Träger gespeichert ist, zur Ausführung des Verfahrens nach einem der Ansprüche 1 bis 6.

## Claims

1. A method for surveying and/or marking points (95a-d) on an object on the basis of planned positions for purposes of constructional activities, with the steps of
• setting up a stationary surveying device (90) at a first known positioning in a surrounding area of the object, wherein the surveying device has
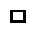 a base (91),
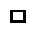 a targeting unit (92), in particular a telescopic sight, which defines a target direction (x) and can be pivoted with respect to the base about at least one axis (y, z), in particular two axes orthogonal to one another,
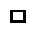 a beam source, in particular a laser source, for generating radiation and also an optical unit for emitting the radiation as a free beam (94) in the target direction, wherein the free beam (94) serves for surveying and/or marking object points (95a-d),
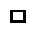 at least one angle meter and also an angle-measuring functionality for measuring the target direction (x), and
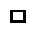 a controller with single-point determining functionality,
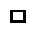 a memory, in which input or surveyed positions can be stored, in particular as part of a plan of a building or room,
• retrieving from the memory a set of object points (95a-d) of the object to be surveyed and/or to be marked,
• surveying and/or marking from the first positioning (P1) object points (95a-c) of the set of object points (95a-d) that can be surveyed and/or can be marked from the first positioning (P1) by means of the free beam (94), on the basis of the target direction (x),
• ascertaining missing object points (95d) of the set of object points (95a-d),
• relocating the surveying device (90) to a second positioning (P2) in the surrounding area of the object,
• automatically determining the second positioning (P2) by the surveying device (30) from the second positioning (P2) on the basis of the knowledge of the first positioning (P1), so that the second positioning (P2) is known,
• surveying and/or marking missing object points (95d) by means of the free beam (94) from the second positioning (P2),
wherein before the relocation, a positioning proposal suitable for the second positioning (P2) is at least approximately calculated by the controller of the surveying device (90),
**characterized in that**
the positioning proposal is calculated on the basis of the known first positioning (P1) and a stored position of at least one of the missing object points (95d), and the positioning proposal is displayed to a user on a display, the display of the positioning proposal takes place in a graphic form,
• embedded in a visualization of a plan of a building or room and/or
• embedded in a 2D or 3D panoramic image, recorded in situ, of the surrounding area and/or
• as an augmented reality representation in a live video image of the surrounding area.

2. The method as claimed in claim 1,
**characterized in that**
a measuring angle as perpendicular as possible of the free beam (94) relative to a surface of the object in the case of one or more missing object points (95d) is used as a criterion for the calculation of the positioning proposal.

3. The method as claimed in claim 1 or 2,
**characterized in that**
the calculation of the positioning proposal takes into account information concerning a target direction (x) in relation to at least one of the missing positions (95d).

4. The method as claimed in any one of claims 1 to 3,
**characterized in that**
the automatic determination of the second positioning (P2) is performed on the basis of a depiction of the surrounding area produced by the surveying device (90) in the second positioning (P2), in particular wherein the depiction of the surrounding area is produced by means of a camera image of the surveying device (90) and/or a laser scan carried out by means of the free beam (94).

5. The method as claimed in claim 4,
**characterized in that**
in the course of the automatic determination of the second positioning (P2), the depiction of the surrounding area of the second positioning
• is compared with a depiction of the surrounding area produced in the first positioning (P1), in particular wherein positions (95a-c) that can be seen in both depictions of the surrounding area and are processed from the first positioning (P1) serve as a position reference and/or
• is compared with a stored digital plan of a building or room.

6. The method as claimed in any one of claims 1 to 5,
**characterized in that**
the automatic determination of the second positioning (P2) is performed by means of a structure-from-motion algorithm on the basis of measurement data of an inertial measurement unit and/or a series of camera images.

7. A stationary surveying device (90) for surveying and/or optically marking points (95a-d) on an object on the basis of planned positions for purposes of constructional activities, wherein the surveying device has
• a base (91),
• a targeting unit (92), in particular a telescopic sight, which defines a target direction (x) and can be pivoted with respect to the base about at least one axis (y, z), in particular two axes orthogonal to one another,
• a beam source, in particular a laser source, for generating radiation and also an optical unit for emitting the radiation as a free beam (94) in the target direction (x),
• at least one angle meter and also an angle-measuring functionality for measuring the target direction (x), and
• a controller with single-point determining functionality,
• a memory, in which input or surveyed positions can be stored, in particular as part of a plan of a building or room,
**characterized in that**
the controller is designed for performing the method as claimed in any one of claims 1 to6.

8. A computer program product with program code, which is stored on a machine-readable carrier, for performing the method as claimed in any one of claims 1 to 6.

## Revendications

1. Procédé d'arpentage et/ou de marquage optique de points (95a-d) sur un objet à l'aide de positions prévues à des fins de construction avec les étapes
- pose d'un appareil d'arpentage (90) stationnaire sur une première position connue dans un environnement de l'objet, dans lequel l'appareil d'arpentage comporte
o une base (91),
o une unité de visée (92), en particulier une lunette de visée, définissant une direction de cible (x) et pivotante par rapport à la base autour d'au moins un axe (y, z), en particulier deux axes orthogonaux l'un par rapport à l'autre,
o une source de rayonnement, en particulier une source laser, destinée à générer un rayonnement ainsi qu'une optique destinée à l'émission du rayonnement comme faisceau libre (94) dans la direction de la cible, dans lequel le faisceau libre (94) sert à l'arpentage et/ou au marquage de points d'objet (95a-d),
o au moins un goniomètre ainsi qu'une fonctionnalité goniométrique pour mesurer la direction de cible (x), et
o une commande dotée d'une fonctionnalité de détermination de point singulier,
o une mémoire, sur laquelle des positions données ou arpentées peuvent être enregistrées, en particulier faisant partie d'un plan de bâtiment ou de pièce,
- rappel d'une quantité de points d'objet (95a-d) à arpenter et/ou à marquer de l'objet depuis la mémoire,
- depuis le premier positionnement (P1), arpentage et/ou marquage de points d'objet (95a-c) de la quantité de points d'objet (95a-d), lesquels sont arpentables et/ou marquables depuis le premier positionnement (P1) au moyen du faisceau libre, sur la base de la direction de cible (x),
- détermination des points d'objet manquants (95d) de la quantité de points d'objet (95a-d),
- décalage de l'appareil d'arpentage (90) sur un deuxième positionnement (P2) dans l'environnement de l'objet,
- détermination automatique du deuxième positionnement (P2) par l'appareil d'arpentage (30) depuis le deuxième positionnement (P2) sur la base de la connaissance du premier positionnement (P1), de sorte que le deuxième positionnement (P2) est connu,
- arpentage et/ou marquage au moyen du faisceau libre (94) de points d'objet manquants (95d) depuis le deuxième positionnement (P2), dans lequel une suggestion de positionnement adaptée pour le deuxième positionnement (P2) est calculée au moins approximativement par la commande de l'appareil d'arpentage (90) avant le décalage,
**caractérisé en ce que**
la suggestion de positionnement est calculée sur la base du premier positionnement (P1) connu et d'une position enregistrée d'au moins un des points d'objet manquants (95d) et est affichée sur un écran pour un utilisateur et l'affichage de la suggestion de positionnement s'effectue sous forme graphique
- incrustée dans une visualisation d'un plan de bâtiment ou de pièce et/ou
- incrustée dans une image panoramique 2D ou 3D de l'environnement capturée sur place et/ou
- comme représentation en réalité augmentée dans une image vidéo en direct de l'environnement.

2. Procédé selon la revendication 1,
**caractérisé en ce que**
en tant que critère pour le calcul de la suggestion de positionnement, un angle de mesure aussi vertical que possible du faisceau libre (94) par rapport à une surface de l'objet utilisé dans les cas d'un ou plusieurs points d'objet manquants (95d).

3. Procédé selon la revendication 1 ou 2,
**caractérisé en ce que**
le calcul de la suggestion de positionnement prend en compte une information sur une direction de cible (x) vers au moins une des positions manquantes (95d).

4. Procédé selon l'une des revendications 1 à 3,
**caractérisé en ce que**
la détermination automatique du deuxième positionnement (P2) s'effectue à l'aide d'une imagerie de l'environnement créée par l'appareil d'arpentage (90) dans le deuxième positionnement (P2), en particulier dans lequel l'imagerie de l'environnement est créée au moyen d'une image caméra de l'appareil d'arpentage (90) et/ou d'un balayage laser mis en œuvre au moyen du faisceau libre (94).

5. Procédé selon la revendication 4,
**caractérisé en ce que**
dans le cadre de la détermination automatique du deuxième positionnement (P2), l'imagerie de l'environnement du deuxième positionnement
- est comparée à une imagerie de l'environnement créée dans le premier positionnement (P1), en particulier dans lequel des positions (95a-c) visibles dans les deux imageries de l'environnement et traitées depuis le premier positionnement (P1) servent de références de position et/ou
- est comparée à un plan numérique enregistré de bâtiment ou de pièce.

6. Procédé selon l'une des revendications 1 à 5,
**caractérisé en ce que**
la détermination automatique du deuxième positionnement (P2) s'effectue au moyen d'un algorithme structure-from-motion à l'aide de données de mesure d'une unité de mesure inertielle et/ou d'une séquence d'images caméra.

7. Appareil d'arpentage stationnaire (90) pour l'arpentage et/ou le marquage optique de points (95a-d) sur un objet à l'aide de positions prévues à des fins de construction, dans lequel l'appareil d'arpentage comporte
- une base (91),
- une unité de visée (92), en particulier une lunette de visée, définissant une direction de cible (x) et pivotante par rapport à la base autour d'au moins un axe (y, z), en particulier deux axes orthogonaux l'un par rapport à l'autre,
- une source de rayonnement, en particulier une source laser, destinée à générer un rayonnement ainsi qu'une optique destinée à l'émission du rayonnement comme faisceau libre (94) dans la direction de la cible (x),
- au moins un goniomètre ainsi qu'une fonctionnalité goniométrique pour mesurer la direction de cible (x), et
- une commande dotée d'une fonctionnalité de détermination de point singulier,
- une mémoire, sur laquelle des positions données ou arpentées peuvent être enregistrées, en particulier faisant partie d'un plan de bâtiment ou de pièce,
**caractérisé en ce que**
la commande est réalisée pour l'exécution du procédé selon l'une des revendications 1 à 6.

8. Produit-programme informatique doté de code de programmation, enregistré sur un support lisible par machine, destiné à exécuter le procédé selon l'une des revendications 1 à 6.
